(19) Europäisches Patentamt
European Patent Office
Office européen des brevets

(11) EP 2 824 874 B1

(12) **EUROPEAN PATENT SPECIFICATION**

(45) Date of publication and mention of the grant of the patent:
**01.11.2017 Bulletin 2017/44**

(21) Application number: **14185053.7**

(22) Date of filing: **04.11.2005**

(51) Int Cl.:
***H04L 12/58*** *(2006.01)* ***G06F 11/00*** *(2006.01)*
***G06F 11/30*** *(2006.01)* ***G06F 11/22*** *(2006.01)*
***G06F 12/14*** *(2006.01)* ***H04L 9/32*** *(2006.01)*
***G06F 11/32*** *(2006.01)* ***G06F 11/34*** *(2006.01)*

(54) **Message profiling systems and methods**

Nachrichtenprofilierungssysteme und -verfahren

Systemes et procedees de profilage de messages

(84) Designated Contracting States:
**AT BE BG CH CY CZ DE DK EE ES FI FR GB GR HU IE IS IT LI LT LU LV MC NL PL PT RO SE SI SK TR**

(30) Priority: **05.11.2004 US 625507 P**
**02.06.2005 US 142943**
**01.07.2005 US 173941**

(43) Date of publication of application:
**14.01.2015 Bulletin 2015/03**

(62) Document number(s) of the earlier application(s) in accordance with Art. 76 EPC:
**05823134.1 / 1 820 101**

(73) Proprietor: **McAfee, LLC**
**Santa Clara, CA 95054 (US)**

(72) Inventors:
- **Judge, Paul**
  **Atlanta, GA 30319 (US)**
- **Rajan, Guru**
  **Duluth, GA Georgia 30097 (US)**
- **Alperovitch, Dmitri**
  **Gaithersburg, MD 20879 (US)**
- **Moyer, Matt**
  **Lawrenceville, GA Georgia 30044 (US)**
- **Krasser, Sven**
  **Pasadena, CA 91105 (US)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**US-A- 6 161 130** **US-A1- 2004 215 977**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 824 874 B1

## Description

### BACKGROUND AND SUMMARY

This document relates generally to systems and methods for processing communications and more particularly to systems and methods for filtering communications.

In the anti-spam industry, spammers use various creative means for evading detection by spam filters. Available anti-spam systems include fail-open systems in which all incoming messages are filtered for spam. However, these systems can be inefficient and inaccurate in properly classifying messages as legitimate or spam.

US 6161130 A discloses classifying incoming e-mail messages based on classifiers that utilize classification techniques, and generating a confidence level for said messages.

US 2004/215977 A1 discloses scoring a message and classifying said message as either spam or not spam based on filters.

The invention relates to a system, according to claim 1, for operation upon one or more data processors to classify communications from messaging entities, to a method, according to independent claim 2, for operation upon one or more data processors for classifying communications, and to a computer readable storage medium according to independent claim 8.

### BRIEF DESCRIPTION OF THE DRAWINGS

FIG. 1 is a block diagram depicting a system for handling transmissions received over a network.

FIG. 2 is a block diagram depicting a reputation system that has been configured for determining reputation scores.

FIG. 3 is a table depicting reputation scores at various calculated probability values.

FIG. 4 is a graph depicting reputation scores at various calculated probability values.

FIG. 5 is a flowchart depicting an operational scenario for generating reputation scores.

FIG. 6 is a block diagram depicting use of non-reputable criteria and reputable criteria for determining reputation scores.

FIG. 7 is a block diagram depicting a reputation system configured to respond with a return value that includes the reputation score of a sender.

FIG. 8 is a block diagram depicting a system for handling transmissions received over a network.

FIG. 9 is a block diagram depicting a filtering system having a message profiler program.

FIG. 10 is a block diagram depicting a message classification tuner program. FIG. 11 is a block diagram depicting use of a genetic algorithm as a message classification tuner program.

FIG. 12 is a flowchart depicting an operational scenario wherein a message profiler is used.

FIG. 13 is a block diagram depicting a message profiler that has been adapted to operate with an adaptive message blocking and whitelisting.

FIG. 14 is a block diagram depicting a reputation system for handling transmissions received over a network.

FIG. 15 is a block diagram depicting a reputation system that has been configured for determining reputation scores.

FIG. 16 is a table depicting reputation scores at various calculated probability values.

FIG. 17 is a block diagram depicting a server access architecture.

DETAILED DESCRIPTION

FIG. 1 depicts at 30 a system for handling transmissions received over a network 40. The transmissions can be many different types of communications, such as electronic mail (e-mail) messages sent from one or more messaging entities 50. The system 30 assigns a classification to a messaging entity (e.g., messaging entity 52), and based upon the classification assigned to the messaging entity, an action is taken with respect to the messaging entity's communication.

The system 30 uses a filtering system 60 and a reputation system 70 to help process communications from the messaging entities 50. The filtering system 60 uses the reputation system 70 to help determine what filtering action (if any) should be taken upon the messaging entities' communications. For example, the communication may be determined to be from a reputable source and thus the communication should not be filtered.

The filtering system 60 identifies at 62 one or more message characteristics associated with a received communication and provides that identification information to the reputation system 70. The reputation system 70 evaluates the reputation by calculating probabilities that the identified message characteristic(s) exhibit certain qualities. An overall reputation score is determined based upon the calculated probabilities and is provided to the filtering system 60.

The filtering system 60 examines at 64 the reputation score in order to determine what action should be taken for the sender's communication (such as whether the communication transmission should be delivered to the communication's designated recipient located within a message receiving system 80). The filtering system 60 could decide that a communication should be handled differently based in whole or in part upon the reputation scored that was provided by the reputation system 70. As an illustration, a communication may be determined to be from a non-reputable sender and thus the communication should be handled as Spam (e.g., deleted, quarantined, etc.).

Reputation systems may be configured in many different ways in order to assist a filtering system. For example, a reputation system 70 can be located externally or internally relative to the filtering system 60 depending upon the situation at hand. As another example, FIG. 2 depicts a reputation system 70 that has been configured to calculate reputation scores based upon such message characteristic identification information as sender identity as shown at 82. It should be understood that other message characteristics can be used instead of or in addition to sender identity. Moreover, transmissions may be from many different types of messaging entities, such as a domain name, IP address, phone number, or individual electronic address or username representing an organization, computer, or individual user that transmits electronic messages. For example, generated classifications of reputable and non-reputable can be based upon a tendency for an IP address to send unwanted transmissions or legitimate communication.

The system's configuration 90 could also, as shown in FIG. 2, be established by identifying a set of binary, testable criteria 92 which appear to be strong discriminators between good and bad senders. P $(NR|C_i)$ can be defined as the probability that a sender is non-reputable, given that it conforms to quality/criterion C and P $(R|C_i)$ can be defined as the probability that a sender is reputable, given that it conforms to quality/criterion Q.

For each quality/criterion $C_i$, periodic (e.g., daily, weekly, monthly, etc.) sampling exercises can be performed to recalculate P $(NR|C_i)$. A sampling exercise may include selecting a random sample set S of N senders for which quality/criterion Ci is known to be true. The senders in the sample are then sorted into one of the following sets: reputable (R), non-reputable (NR) or unknown (U). NR is the number of senders in the sample that are reputable senders, Nm is the number of senders that are non-reputable senders, etc. Then, P $(NR|C_i)$ and P (R|G) are estimated using the formulas:

$$P(NR|C_i) = \frac{N_{NR}}{N}$$

$$P(R|C_i) = \frac{N_R}{N}$$

For this purpose, N = 30 was determined to be a large enough sample size to achieve an accurate estimate of P $(NR|C_i)$ and P $(R|C_i)$ for each quality/criterion $C_i$.

After calculating P $(NR|C_i)$ and P $(R|C_i)$ for all criteria, the computed probabilities are used to calculate an aggregate non-reputable probability 94, $P_{NR}$, and an aggregate reputable sender probability 96, $P_R$, for each sender hi the reputation space. These probabilities can be calculated using the formulas:

$$P_{NR} = \left(1 - \prod_{i=1}^{N} \begin{cases} 1 - P(NR|C_i) \text{ if criteruion i applies} \\ 1 \quad \text{otherwise} \end{cases}\right) (\text{\# of criteria that apply})$$

$$P_R = \left(1 - \prod_{i=1}^{N} \begin{cases} 1 - P(R|C_i) \ \textit{if criteruion i applies} \\ 1 \quad \textit{otherwise} \end{cases}\right) (\#\ \textit{of criteria that apply})$$

In experimentation, the above formulas appeared to behave very well for a wide range of input criteria combinations, and in practice their behavior appears to be similar to the behavior of the formula for correctly computing naive joint conditional probabilities of "non-reputable" and "reputable" behavior for the input criteria.

After calculating $P_{NR}$ and $P_R$ for each sender, a reputation score is calculated for that sender using the following reputation function:

$$f(P_{NR}, P_R) = (c_1 + c_2P_{NR} + c_2P_R + c_3P_{NR}^2 + c_3P_R^2 + c_4P_{NR}P_R + c_5P_{NR}^3 + c_5P_R^3 + c_6P_{NR}P_R^2 + c_6P_{NR}^2P_R)((P_{NR} - P_R)^3 + c_7(P_{NR} - P_R))$$

where

$C_1$ = 86.50

$C_2$ = -193.45

$C_3$ = -35.19

$C_4$ = 581.09

$C_5$ = 234.81

$C_6$ = -233.18

$C_7$ = 0.51

It should be understood that different functions can act as a reputation score determinator 98 and can be expressed in many different forms in addition to a functional expression. As an illustration, FIG. 3 depicts at 100 a tabular form for determining reputation scores. The table shows reputation scores produced by the above function, based on values of $P_{NR}$ and $P_R$ as they each vary between 0.0 and 1.0. For example as shown at 110, a reputation score of 53 is obtained for the combination of $P_{NR}$ = 0.9 and $P_R$ = 0.2. This reputation score is a relatively high indicator that the sender should not be considered reputable. A reputation score of 0 is obtained if $P_{NR}$ and $P_R$ are the same (e.g., the reputation score is 0 if $P_{NR}$ = 0.7 and $P_R$ = 0.7 as shown at 120). A reputation score can have a negative value to indicate that a sender is relatively reputable as determined when $P_R$ is greater than $P_{NR}$. For example, if $P_{NR}$ = 0.5 and $P_R$ = 0.8 as shown at 130, then the reputation score is -12.

Reputation scores can be shown graphically as depicted in FIG. 4 at 150. Graph 150 was produced by the above function, based on values of $P_{NR}$ and $P_R$. FIG. 4 illustrates reputation score determinations in the context of Spam in that the terms $P_{NR}$ and $P_R$ are used respectively as probability of hamminess and probability of spamminess as the probabilities each vary between 0.0 and 1.0.

As shown in these examples, reputation scores can be numeric reputations that are assigned to messaging entities based on characteristics of a communication (e.g., messaging entity characteristic(s)) and/or a messaging entity's behavior. Numeric reputations can fluctuate between a continuous spectrum of reputable and non-reputable classifications. However, reputations may be non-numeric, such as by having textual, or multiple level textual categories.

FIG. 5 depicts an operational scenario wherein a reputation system is used by a filtering system to generate reputation scores, hi this operational scenario, a reputation score is computed for a particular sender (e.g., IP address, domain name, phone number, address, name, etc), from a set of input data. With reference to FIG. 5, data is gathered at step 200 that is needed to calculate non-reputable and reputable probabilities for a sender. The data is then aggregated at step 210 and used in probability calculations at step 220. This includes determining, for a sender, non-reputable probabilities and reputable probabilities for various selected criteria. An aggregate non-reputable probability and an aggregate reputable probability are then calculated for each sender.

After calculating an aggregate non-reputable probability and an aggregate reputable probability for each sender, a reputation score is calculated at 230 for that sender using a reputation function. At step 240, the sender's reputation score is distributed locally and/or to one or more systems to evaluate a communication associated with the sender. As an illustration, reputation scores can be distributed to a filtering system. With the reputation score, the filtering system can choose to take an action on the transmission based on the range the sender reputation score falls into. For unreputable senders, a filtering system can choose to drop the transmission (e.g., silently), save it in a quarantine area, or flag the transmission as suspicious, hi addition, a filter system can choose to apply such actions to all future transmissions from this sender for a specified period of time, without requiring new lookup queries to be made to the reputation system. For reputable senders, a filtering system can similarly apply actions to the transmissions to allow them to bypass all or certain filtering techniques that cause significant processing, network, or storage overhead for the filtering system.

It should be understood that similar to the other processing flows described herein, the processing and the order of the processing may be altered, modified and/or augmented and still achieve the desired outcome. For example, an optional addition to the step of extracting unique identifying information about the sender of the transmission would be to use sender authentication techniques to authenticate certain parts of the transmission, such as the purported sending domain name in the header of the message, to unforgeable information about the sender, such as the IP address the transmission originated from. This process can allow the filtering system to perform lookups on the reputation system by querying for information that can potentially be forged, had it not been authenticated, such as a domain name or email address. If such domain or address has a positive reputation, the transmission can be delivered directly to the recipient system bypassing all or some filtering techniques. If it has a negative reputation, the filtering system can choose to drop the transmission, save it in a quarantine area, or flag it as suspicious.

Many different types of sender authentication techniques can be used, such as the Sender Policy Framework (SPF) technique. SPF is a protocol by which domain owners publish DNS records that indicate which IP addresses are allowed to send mail on behalf of a given domain. As other non-limiting examples, SenderID or DomainKeys can be used as sender authentication techniques.

As another example, many different types of criteria may be used in processing a sender's communication. FIG. 6 depicts the use of non-reputable criteria 300 and reputable criteria 310 for use in determining reputation scores.

The non-reputable criteria 300 and reputable criteria 310 help to distinguish non-reputable senders and reputable senders. A set of criteria can change often without significantly affecting the reputation scores produced using this scoring technique. As an illustration within the context of SPAM identification, the following is a list of spamminess criteria that could be used in the reputation scoring of a message sender. The list is not intended to be exhaustive, and can be adapted to include other criteria or remove criteria based upon observed behavior.

1. Mean Spam Score: A sender is declared "non-reputable" if a mean spam profiler score of transmissions that it sends exceeds some threshold, W.

2. RDNS Lookup Failure: A sender is declared "non-reputable" if reverse domain name system (RDNS) queries for its IP addresses fail.

3. RBL Membership: A sender is declared "non-reputable" if it is included in a real-time blackhole list (RBL). (Note: multiple RBLs may be used.
Each RBL can constitute a separate testing criterion.)

4. Mail Volume: A sender is declared "non-reputable" if its average (mean or median) transmission volume exceeds a threshold, X, where X is measured in transmissions over a period of time (such as, e.g., a day, week, or month). (Note: multiple average volumes over multiple time periods may be used, and each average volume can constitute a separate testing criterion.)

5. Mail Burstiness/Sending History: A sender is declared "non-reputable" if its average (mean or median) transmission traffic pattern burstiness
(defined by the number of active sending sub-periods within a larger time period, e.g., number of active sending hours in a day or number of active
sending days in a month) is less than some threshold, Y, where Y is measured in sub-periods per period. (Note: multiple average burstiness measures over multiple time periods may be used, and each average burstiness measure can constitute a separate testing criterion.)

6. Mail Breadth: A sender is declared "non-reputable" if its average (mean or median) transmission traffic breadth (as defined by the percentage of systems that receive transmissions from the same sender during a period of time (such as, e.g., a day, week, or month)) exceeds some threshold, Z.
(Note: multiple average breadths over multiple time periods may be used, and each average breadth measure can constitute a separate testing criterion.)

7. Malware Activity: A sender is declared "non-reputable" if it is known to have delivered one or more malware codes (such as, e.g., viruses, spyware, intrusion code, etc) during a measurement period (e.g., a day, week, or month).

8. Type of Address: A sender is declared "non-reputable" if it is known to be dynamically assigned to dial-up or broadband dynamic host control protocol (DHCP) clients by an internet service provider (ISP).

9. CIDR Block Spamminess: A sender is declared "non-reputable" if its IP addresses are known to exist within classless inter-domain routing (CIDR) blocks that contain predominantly "non-reputable" IP addresses.

10. Human Feedback: A sender is declared "non-reputable" if it is reported to have sent undesirable transmissions by people analyzing the content and other characteristics of those transmissions.

11. SpamTrap Feedback: A sender is declared "non-reputable" if it is sending transmissions to accounts that have been declared as spamtraps and as such are not supposed to receive any legitimate transmissions.

12. Bounceback Feedback: A sender is declared "non-reputable" if it is sending bounceback transmissions or transmissions to accounts that do not exist on the destination system.

13. Legislation/Standards Conformance: A sender is declared "non- reputable" if it is not conforming to laws, regulations, and well-established standards of transmission behavior in the countries of operation of either the sender and/or the recipient of the transmissions.

14. Continuity of Operation: A sender is declared "non-reputable" if it has not operated at that sending location longer than some threshold Z.

15. Responsiveness to Recipient Demands: A sender is declared "non-reputable" if it is not responding in a reasonable timeframe to legitimate demands of the recipients to terminate their relationship with the sender to not receive any more transmissions from them.

The following is a list of "reputable" criteria that could be used in determining the "reputability" of a sender. The list is not intended to be exhaustive, and can be adapted to include other criteria or remove criteria based upon observed behavior.

1. Mean Spam Score: A sender is declared "reputable" if the mean spam profiler score of transmissions that it sends falls below some threshold, W.

2. Human Feedback: A sender is declared "reputable" if it is reported to have sent only legitimate transmissions by people analyzing transmission flows from that sender, in conjunction with the reputation of the organization that owns those sending stations.

After computing a reputation grade for each sender in the universe of senders, a reputation classification can be made available via a communication protocol that can be interpreted by the queries that make use of the reputation system (e.g., DNS, HTTP, etc). As shown in FIG. 7, when a query 350 is issued for a sender, the reputation system can respond with a return value 360 that includes the reputation score of that sender, as well as any other relevant additional information that can be used by the querier to make the final judgment on the acceptability of the sender's transmission (e.g., age of the reputation score, input data that determined the score, etc).

An example of a communication protocol that can be used is a domain name system (DNS) server which can respond with a return value in the form of an IP address: Y12.x.y.z. The IP address can be encoded using the formula:

$$IP = 172.\left(\frac{rep - |rep|}{2 \times rep}\right).(|rep| div 256).(|rep| mod 256)$$

The reputation of the queried sender can be deciphered from the return value as follows:

$$rep = (-1)^{2-x} \times (256y + z)$$

Therefore, when x = 0, the returned reputation is a positive number, and when x = 1, the returned reputation is a negative number. The absolute value of the reputation is determined by the values of y and z. This encoding scheme enables the server to return via the DNS protocol reputation values within the range [-65535, 65535]. It also leaves seven (7) unused bits, namely the seven high-order bits of x. These bits can be reserved for extensions to the reputation system. (For example, the age of a reputation score may be communicated back to the querier.)

FIG. 8 depicts at 430 a system for handling transmissions received over a network 440. The transmissions can be many different types of communications, such as electronic mail (e-mail) messages sent from one or more messaging entities 450. The system 430 uses a filtering system 460 to help process the communications from the messaging entities 450. The filtering system 460 examines characteristics associated with the communications from the messaging entities 450, and based upon the examination, an action is taken with respect to the communications. For example, a communication may be determined to be legitimate and thus the communication should not be filtered by the filtering system 460 and instead provided to a receiving system 70 for delivery to the intended recipient.

To increase the accuracy of classifying messages properly (e.g., as spam or legitimate), a filtering system 460 can be configured with a message profiler program 500 as shown in FIG. 9. A message profiler 500 uses multiple message classification techniques or filters 510 to classify messages as shown in FIG. 9. Example message classification techniques or filters 510 that a message profiler 500 can use include:

- Reverse DNS (RDNS) - a classification technique that performs a reverse domain name service (DNS) lookup, based on the message sender's IP address, to check (1) whether a domain exists in the DNS system for that IP address, and (2) if such a domain exists, whether the domain matches the domain from which the sender claims to be sending the message.

- Real-time Black-hole Lists (RBLs) - a classification technique that performs one or more real-time black-hole list (RBL) queries, based on the message sender's IP address, to check whether the IP address has been identified by any RBLs as an IP address that is likely to send unwanted messages.

- Reputation Server - a classification technique that performs one or more reputation server queries, based on the message sender's IP address and/or their domain name and other message sender characteristics, to receive a score that describes the sender's reputation.

- Signatur el fingerprinting-based Analysis (e.g., Statistical Lookup Service (SLS)) - a classification technique that computes a set of message hashes and queries a centralized statistical lookup service (SLS) to determine how frequently the computed message hashes have been seen in recent mail flow.

- Message Header Analysis Classification Technique - as examples, this technique can include System Defined Header analysis (SDHA), User Defined Header Analysis (UDHA), etc.

- System Defined Header Analysis (SDHA) - a set of classification techniques that examine a message and identify whether the message's headers exhibit certain system-defined characteristics that tend to identify likely unwanted message senders.

- User Defined Header Analysis (UDHA) - a set of classification techniques that examine a message and identify whether the message's headers exhibit certain user-defined characteristics that tend to identify likely unwanted message senders.

- Sender Authentication - a set of classification techniques that perform lookups to determine (1) whether the sender's claimed domain has published a record of mail servers that are authorized to send mail for that domain, and (2) if such a record has been published, whether the record authorizes the sender's IP address to send mail on behalf of the claimed domain. Examples of commonly used Sender Authentication techniques include Sender Policy Framework (SPF) and Sender ID.

- Bayesian Filtering - a statistical classification technique that computes an estimate of the joint conditional probability that a message falls into a specific category, based on the set of textual tokens (words) in the message.

- Content Filtering - a classification technique that searches the contents of a message for words that have been associated with certain message categories.
- Clustering Classification - a classification technique that based upon measuring similarity among features, communications are clustered into such groups as desired, undesired (e.g., spam), etc. The clustering is performed such that intra-group similarities are high and inter-group similarities are low.

The list is not intended to be exhaustive, and can be adapted to include other techniques as they are discovered. Some of the descriptions in the list constitute a single technique, while others constitute a combined set of many similar or closely related techniques, hi cases where multiple techniques are described collectively, the message profiler 500 permits each technique to have its own confidence value.

A message profiler 500 classifies messages using a threshold-based technique. Each of the classification techniques 510 used by the message profiler 500 has an associated confidence value 520. When a message arrives for profiling, the message profiler 500 iterates through the classification techniques and allows each technique to attempt to classify the message. The result of each classification is a decimal value in the range [0, 1]. After iterating through each classification technique, the message profiler 500 computes a score for the message using the following formula:

$$Score = \sum_{i=1}^{N} SV_i \times C_i$$

where $SV_i$ is the confidence value associated with classification technique i, and Q is the classification value in [0, 1] produced by classification technique i.

In using classification techniques with non-linear scoring functions, the following formula can be used:

$$Score = \sum_{i=1}^{N} (SV_{1i} \times C_i + SV_{2i} \times C_i^2)$$

where $SV_{1i}$ and $SV_{2i}$; are the confidence value associated with classifcation technique i, and $C_i$, is the classification value in [0, 1] produced by classification technique /.

If the message score exceeds some specified threshold T as determined at 520, then the message is declared to belong to the first defined category. If the message score is below the threshold, it is declared to belong to the opposite category. The system can then take an appropriate action based on the threshold reached by the message score, such as quarantining the message, dropping the message (i.e., deleting the message without delivery as shown at 530), rewriting the subject of the message to contain some specific string (e.g., "SUSPECTED SPAM"), passing on a message to the encryption engine for secure delivery, etc. The system can also allow for specifying multiple thresholds and applying a different action or actions at each threshold, which would signify the increased confidence of the message profiler 500 in the result of the classification.

The effectiveness and accuracy of a message profiler 500 is dependent on several factors, such as on the set of $SV_i$; or $SV_{1i}/SV_{2i}$; confidence values 520 associated with the classification techniques 510. A tunable message classification configuration can be used to generate an optimized set of values along with an associated set of thresholds and actions and that can be generated periodically to keep a message profiler 500 updated with the latest protection against the frequent changes in the score distributions of classification techniques operating on the constantly changing message flow patterns. As such, a message profiler configuration includes a vector ($SV_1$, $SV_2$, ...., $SV_N$) (which represents the confidence values of all N classification techniques).

As shown in FIG. 10, a message classification tuner program 600 can be configured to tune a message profiler 500 by performing a probabilistic search through the vector space of all possible vectors and identifying a vector that maximizes the filtering accuracy of the profiler for a pre-selected threshold. The tuner 600 can use different approaches to do this, such as by using a heuristic approach 610.

FIG. 11 illustrates the tuner using a heuristic approach known as a genetic algorithm 650 in order to perform a vector space search. The concepts underpinning a genetic algorithm come from the theory of evolution, in which genotypes (expressed via chromosomes) compete with each other via their phenotypes (expressed as biological organisms). Over time, biological evolution produces highly adapted and complex organisms that are capable of surviving in the environment for which they evolved. Similarly, a genetic algorithm searches through a vector space consisting of candidate solutions to a problem, where each candidate solution is expressed as a vector. Over many simulated generations of candidate solutions, the genetic algorithm gradually evolves towards increasingly well-adapted solutions to the problem.

The genetic algorithm's ability to evolve good solutions to a problem over time depends upon the existence of an accurate mechanism for evaluating the relative fitness level of a candidate solution compared to other candidate solutions. Thus, the genetic algorithm 650 is designed with a fitness function 660 that accurately models the fitness of candidate solutions in the actual problem domain.

Below is a fitness function 660 that could be used for optimization of a message profiler 500:

$$Fitness = \frac{\sum |S_{CAT1_MISTAKESi} - T|}{N_{CAT1}} + C \times \frac{\sum |S_{CAT2_{MISTAKESi}} - T + 1|}{N_{CAT2}}$$

The definitions of terms in the function are as follows:

$N_{CAT1}$ = number of message vectors from the overall data set that belong to the first category

$N_{CAT2}$ = number of message vectors from the overall data set that belong to the second category C = constant multiplier for misclassified messages from the second category $S_{CAT1_MISTAKESi}$ = message profiler score of message vector i from the first message category that has been misclassified to belong in the other category

$S_{CAT2_MISTAKESi}$ = message profiler score of message vector i from the second message category that has been misclassified to belong in the other category

T = message profiler numeric threshold above which a message is considered to belong to the first category

The function expresses the cost associated with the mistakes that a configuration made in attempting to correctly classify message vectors in the set of pre-classified data. Accordingly, a lower fitness value is considered better for the genetic algorithm's purposes. The first term in the function expresses the cost associated with messages from the first category that have been misclassified to belong in the second (e.g., unwanted messages that have been classified as legitimate, also known as false negatives), and the second term expresses the cost associated with messages from the second category that have been misclassified to belong in the first (e.g., legitimate messages that have been classified as unwanted, also known as false positives). The summations represent the total number of points by which a configuration was wrong when attempting to classify message vectors. Intuitively, each term is essentially an expression of both the average frequency of classification errors and the average magnitude of classification errors. Note that the second term is to be multiplied by a constant, C. This constant (which can be set to a value of 20) represents the relative cost of a misclassification of a message from one category in relation to misclassification of a message from the opposing category. By setting C to 20, this indicates that classification mistakes on messages from the second category are 20 times more costly than mistakes from the second category. For example, if a message profiler 500 is used for classification of wanted and unwanted mail, the first category would represent the unwanted mail (e.g., spam) and the second category would represent legitimate messages. Then the above function would deem misclassifications of legitimate messages (false positives) to be 20 times as costly as misclassification of unwanted messages (false negatives). This reflects the real-world view in the anti-spam community that false positives carry much higher risk than false negatives. If a message profiler 500 is used for policy compliance-related classification, a false positive is a message that contains sensitive information but is not labeled as such by the message profiler 500 and is, therefore, allowed to evade the policies that an organization may have chosen to apply to that particular category.

FIG. 12 depicts an operational scenario wherein a message profiler can be used. With reference to FIG. 12, the operational scenario includes receiving at step 710 a communication that was sent over a network from a messaging entity. A plurality of message classification techniques is then used at 710 to classify the communication. Each message classification technique is associated with a confidence value which is used in generating a message classification output from the message classification technique. The output of each classification can be numeric values, textual values, or categorical values. The message classification outputs are combined at step 720 in order to generate a message profile score at step 730. The message profile score is used at step 740 to decide what action is to be taken with respect to the communication associated with the messaging entity.

It should be understood that similar to the other processing flows described herein, the processing and the order of the processing may be altered, modified and/or augmented and still achieve the desired outcome. For example, a message profiler may be configured for an operational scenario that recognizes that there is a single technique is not capable of adequately classifying a message into two distinct categories, such as distinguishing between wanted (legitimate) and unwanted (spam, phishing, viruses, etc) message communications or determining whether a message complies with a specific organization policy, law, or regulation. In this operational scenario, such a configured message profiler can be designed to:

1. Provide a framework for combining the results of many message classification techniques into an aggregate classification (such as "unwanted" or "legitimate", "HIPPA compliant", "GLBA violation". "HR policy violation", etc), without specifying a priori which classification technique(s) will be used.

2. Decouple each classification technique's importance (expressed via its contribution towards the aggregate classification) from its classification logic, so that a technique's level of importance may be adjusted to reflect changes in its accuracy over time.

3. Provide a mechanism through which to describe the relative importance of each classification technique within the framework and the correlation of their individual accuracy, so that the framework can be adjusted to use this information to achieve very accurate rates in aggregate classification.

4. Provide a mechanism through which to discover the relative importance of each classification technique within the framework, so that the framework can be "tuned" for maximum classification accuracy in a given

environment.

Still further, a message profiler may be configured to operate in other operational scenarios. For example, FIG. 13 depicts a message profiler that has been adapted to operate with adaptive message blocking and whitelisting. With reference to FIG. 13, in addition to classification of individual messages, the aggregated results of a message profiler program 500 can also be used for classifying at 820 senders of messages based on the distributions of message profiler scores that their messages are receiving. If the average score of messages received from a particular sender (e.g., IP) during a specified timeframe (e.g., hour, day, week) exceeds a specified threshold $T_U$ and the score distribution has a standard deviation smaller than $ST_U$, that sender can be classified 'un-reputable' (which information is stored in data store 840).

Process 800 can then use the data from data store 840 to determine that all messages and connections originating from such a sender can be dropped at 810 without processing for the next X hours. Correspondingly, if the average score is below threshold $T_L$ with a standard deviation smaller than $ST_L$, the sender can be considered legitimate (which information is stored in data store 830) and messages from that sender can be allowed by process 800 to bypass certain filtering techniques (e.g., the filtering of message profiler 500) that can cause significant processing, network, or storage overhead for the filtering system 460.

A message profiler may also be used in connection with adaptive training of endo and exo-filtering systems. Using the systems and methods of sender classifier described herein, a message profiler can be used for training of the various filtering techniques that are used within the profile, as well as others that lie completely outside of it. Such techniques may include Bayesian, Support Vector Machine (SVM) and other statistical content filtering techniques, as well as signature-based techniques such as Statistical Lookup Service (SLS) and message clustering-type techniques. The training strategies for such techniques may use sets of classified legitimate and unwanted messages, which can be provided by the message profiler based on sender reputations, assigned from the aggregate scores of messages from such senders.

Messages from senders classified as un-reputable can be provided to the filtering system trainer as unwanted, and the wanted messages will be taken from stream sent by the legitimate senders.

As described above, a message profiler 500 may use a reputation-based approach as one classification technique. FIG. 14 depicts at 900 a reputation system that can be used by a filtering system 460 in handling transmissions received over a network 440 from messaging entities 450. More specifically, the filtering system 460 uses the reputation system 900 to help determine (at least in part) what filtering action (if any) should be taken upon the messaging entities' communications. For example, the communication may be determined to be from a reputable source and thus the communication should not be filtered.

The filtering system 460 identifies at 950 the sender of a received communication and provides that identification information to the reputation system 900. The reputation system 900 evaluates the reputation of the queried sender's identity by calculating probabilities that a messaging entity exhibits certain characteristics. An overall reputation score is determined based upon the calculated probabilities and is provided to the filtering system 460. A reputation score can be numeric, textual, or categorical in value.

The filtering system 460 determines at 952 what action should be taken for the sender's communication. The filtering system 460 could use the reputation score from the reputation system 900 as a message classification filter which is to be multiplied by its respectively tuned confidence value and then aggregated with other message classification filter results.

Reputation systems may be configured in many different ways in order to assist a filtering system. For example, FIG. 15 depicts the reputation system 900 that has been configured to calculate reputation scores. The system's configuration 1000 can be established by identifying a set of binary, testable criteria 1002 which appear to be strong discriminators between good and bad senders. P $(NR|C_i)$ can be defined as the probability that a sender is non-reputable, given that it conforms to

quality/criterion $C_i$, and P $(R|C_i)$ can be defined as the probability that a sender is reputable, given that it conforms to quality/criterion $C_i$.

For each quality/criterion $C_i$, periodic (e.g., daily, weekly, monthly, etc.) sampling exercises can be performed to recalculate P $(NR|C_i)$. A sampling exercise may include selecting a random sample set S of N senders for which quality/criterion $C_i$ is known to be true. The senders in the sample are then sorted into one of the following sets: reputable (R), non-reputable (NR) or unknown (U). $N_R$ is the number of senders in the sample that are reputable senders, $N_{NR}$ is the number of senders that are non-reputable senders, etc. Then, P $(NR|C_i)$ and P $(R|C_i)$ are estimated using the formulas:

$$P(NR|C_i) = \frac{N_{NR}}{N}$$

$$P(R|C_i) = \frac{N_R}{N}$$

For this purpose, N = 30 was determined to be a large enough sample size to achieve an accurate estimate of P $(NR|C_i)$ and P $(R|C_i)$ for each quality/criterion $C_i$.

After calculating P $(NR|C_i)$ and P $(R|C_i)$ for all criteria, the computed probabilities are used to calculate an aggregate non-reputable probability 1004, $P_{NR}$, and an aggregate reputable sender probability 1006, $P_R$, for each sender in the reputation space. These probabilities can be calculated using the formulas:

$$P_{NR} = \left(1 - \prod_{i=1}^{N} \begin{cases} 1 - P(NR|C_i) & if\ criteruion\ i\ applies \\ 1 & otherwise \end{cases}\right) (\#\ of\ criteria\ that\ apply)$$

$$P_R = \left(1 - \prod_{i=1}^{N} \begin{cases} 1 - P(R|C_i) & if\ criteruion\ i\ applies \\ 1 & otherwise \end{cases}\right) (\#\ of\ criteria\ that\ apply)$$

In experimentation, the above formulas appeared to behave very well for a wide range of input criteria combinations, and in practice their behavior appears to be similar to the behavior of the formula for correctly computing naive joint conditional probabilities of "non-reputable" and "reputable" behavior for the input criteria.

After calculating $P_{NR}$ and $P_R$ for each sender, a reputation score is calculated for that sender using the following reputation function:

$$f(P_{NR}, P_R) = (c_1 + c_2 P_{NR} + c_2 P_R + c_3 P_{NR}^2 + c_3 P_R^2 + c_4 P_{NR} P_R + c_5 P_{NR}^3 + c_5 P_R^3 + c_6 P_{NR} P_R^2 + c_6 P_{NR}^2 P_R)((P_{NR} - P_R)^3 + c_7 (P_{NR} - P_R))$$

where

$C_1$ = 86.50
$C_2$ = -193.45
$C_3$ =-35.19
$C_4$ = 581.09
$C_5$ = 234.81

$G_6$ = -233.18
$C_7$ = 0.51

It should be understood that different functions can act as a reputation score determinator 1008 and can be expressed in many different forms in addition to a functional expression. As an illustration, FIG. 16 depicts at 1100 a tabular form for determining reputation scores. The table shows reputation scores produced by the above function, based on values of PNR and PR as they each vary between 0.0 and 1.0. For example as shown at 1110, a reputation score of 53 is obtained for the

combination of $P_{NR}$ = 0.9 and $P_R$ = 0.2. This reputation score is a relatively high indicator that the sender should not be considered reputable. A reputation score of 0 is obtained if PNR and PR are the same (e.g., the reputation score is 0 if $P_{NR}$ = 0.7 and $P_R$ = 0.7 as shown at 1120). A reputation score can have a negative value to indicate that a sender is relatively reputable as determined when $P_R$ is greater than $P_{NR}$- For example, if $P_{NR}$ = 0.5 and $P_R$ = 0.8 as shown at 1130, then the reputation score is -12.

Many different types of criteria may be used in a reputation system's processing of a sender's communication, such as using non-reputable criteria and reputable criteria to determine reputation scores. Examples of such criteria are disclosed in U.S. Provisional Application Ser. No. 60/625,507, entitled

"CLASSIFICATION OF MESSAGING ENTITIES," filed on November 5, 2004.

The systems and methods disclosed herein are presented only by way of example and are not meant to limit the scope of the invention. For example, a system and method can be configured to handle many different types of communications, such as legitimate messages or unwanted communications or communications violative of a pre-selected policy. As an illustration, an unwanted communication could include a spam or virus communication, and a pre-selected policy could include a corporate communication policy, a messaging policy, a legislation or regulatory policy, or an international communication policy.

As another example of the wide scope and variations of the systems and methods disclosed herein, the systems and methods may be implemented on various types of computer architectures, such as for example on different types of networked environments. As an illustration, FIG. 17 depicts a server access architecture within which the disclosed systems and methods may be used (e.g., as shown at 1330 in FIG. 17). The architecture in this example includes a corporation's local network 1290 and a variety of computer systems residing within the local network 1290. These systems can include application servers 1220 such as Web servers and e-mail servers, user workstations running local clients 1230 such as e-mail readers and Web browsers, and data storage devices 1210 such as databases and network connected disks. These systems communicate with each other via a local communication network such as Ethernet 1250. Firewall system 1240 resides between the local communication network and Internet 1260. Connected to the Internet 1260 are a host of external servers 1270 and external clients 1280. It should be understood that the present disclosure can any variety of network, including, but not limited to an intranet, wireless network, wide area networks, local area networks, and combinations thereof, in order to facilitate communication between components.

Local clients 1230 can access application servers 1220 and shared data storage

1210 via the local communication network. External clients 1280 can access external application servers 1270 via the Internet 1260. In instances where a local server 1220 or a local client 1230 requires access to an external server 1270 or where an external client 1280 or an external server 1270 requires access to a local server 1220, electronic communications in the appropriate protocol for a given application server flow through "always open" ports of firewall system 1240.

A system 1330 as disclosed herein may be located in a hardware device or on one or more servers connected to the local communication network such as Ethernet 1280 and logically interposed between the firewall system 1240 and the local servers 1220 and clients 1230. Application-related electronic communications attempting to enter or leave the local communications network through the firewall system 1240 are routed to the system 1330.

In the example of FIG. 17, system 1330 could be configured to store and process reputation data about many millions of senders as part of a threat management system. This would allow the threat management system to make better informed decisions about allowing or blocking electronic mail (e-mail).

System 1330 could be used to handle many different types of e-mail and its variety of protocols that are used for e-mail transmission, delivery and processing including SMTP and POP3. These protocols refer, respectively, to standards for communicating e-mail messages between servers and for server-client communication related to e-mail messages. These protocols are defined respectively in particular RFCs (Request for Comments) promulgated by the EETF (Internet Engineering Task Force). The SMTP protocol is defined in RFC 1221, and the POP3 protocol is defined in RFC 1939.

Since the inception of these standards, various needs have evolved in the field of e-mail leading to the development of further standards including enhancements or additional protocols. For instance, various enhancements have evolved to the SMTP standards leading to the evolution of extended SMTP. Examples of extensions may be seen in (1) RFC 1869 that defines a framework for extending the SMTP service by defining a means whereby a server SMTP can inform a client SMTP as to the service extensions it supports and in (2) RFC 1891 that defines an extension to the SMTP service, which allows an SMTP client to specify (a) that delivery status notifications (DSNs) should be generated under certain conditions, (b) whether such notifications should return the contents of the message, and (c) additional information, to be returned with a DSN, that allows the sender to identify both the recipient(s) for which the DSN was issued, and the transaction in which the original message was sent.

In addition, the IMAP protocol has evolved as an alternative to POP3 that supports more advanced interactions between e-mail servers and clients. This protocol is described in RFC 2060.

Other communication mechanisms are also widely used over networks. These communication mechanisms include, but are not limited to, Voice Over D? (VoIP) and Instant Messaging. VoIP is used in IP telephony to provide a set of facilities for managing the delivery of voice information using the Internet Protocol (IP). Instant Messaging is a type of communication involving a client which hooks up to an instant messaging service that delivers communications (e.g., conversations) in realtime.

As the Internet has become more widely used, it has also created new troubles for users. In particular, the amount of spam received by individual users has increased dramatically in the recent past. Spam, as used in this specification, refers to any communication receipt of which is either unsolicited or not desired by its recipient. A system and method can be configured as disclosed herein to address these types of unsolicited or undesired communications. This can be helpful in that e-mail spamming consumes corporate resources and impacts productivity.

It is further noted that the systems and methods disclosed herein may use data signals conveyed via networks (e.g., local area network, wide area network, internet, etc.), fiber optic medium, carrier waves, wireless networks, etc. for communication with one or more data processing devices. The data signals can carry any or all of the data disclosed herein that is provided to or from a device.

Additionally, a methods and systems described herein may be implemented on many different types of processing devices by program code comprising program instructions that are executable by one or more processors. The software program instructions may include source code, object code, machine code, or any other stored data that is operable to cause a processing system to perform methods described herein.

The systems' and methods' data (e.g., associations, mappings, etc.) may be stored and implemented in one or more different types of computer-implemented ways, such as different types of storage devices and programming constructs (e.g., data stores, RAM, ROM, Flash memory, flat files, databases, programming data structures, programming variables, IF-THEN (or similar type) statement constructs, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. It is also noted that software instructions or a module can be implemented for example as a subroutine unit of code, or as a software function unit of code, or as an object (as in an object-oriented paradigm), or as an applet, or in a computer script language, or as another type of computer code or firmware. The software components and/or functionality may be located on a single device or distributed across multiple devices depending upon the situation at hand.

It should be understood that as used in the description herein and throughout the claims that follow, the meaning of "a," "an," and "the" includes plural reference unless the context clearly dictates otherwise. Also, as used in the description herein and throughout the claims that follow, the meaning of "in" includes "in" and "on" unless the context clearly dictates otherwise. Finally, as used in the description herein and throughout the claims that follow, the meanings of "and" and "or" include both the conjunctive and disjunctive and may be used interchangeably unless the context clearly dictates otherwise; the phrase "exclusive or" may be used to indicate situation where only the disjunctive meaning may apply.

## Claims

**1.** A system for operation upon one or more data processors to classify communications from messaging entities (50), comprising:

a plurality of message classification techniques (510);

wherein the plurality of message classification techniques (510) are configured to classify a communication received from a messaging entity (50);
message profiling logic (500) configured to combine the message classification outputs in order to generate a message profile score;
wherein each message classification technique (510) is associated with a confidence value which is used in generating a message classification output from the message classification technique (510); and
wherein a filter value from each of the classification techniques is multiplied by its associated confidence value in order to generate the message classification output, in particular wherein a tuner program (600) is used to tune the confidence values associated with the message classification techniques (510),
wherein the tuner program (600) uses a genetic algorithm (650) to tune the confidence values;
wherein the genetic algorithm is designed with a fitness function (260) that models the fitness of candidate solutions in the actual problem domain; and
wherein the fitness function (260) expresses the cost associated with the mistakes that a configuration made in attempting to correctly classify message vectors in the set of pre-classified data, in particular wherein the system is configured to operate with adaptive message blocking and whitelisting.

**2.** A method for operation upon one or more data processors for classifying communications comprising:

receiving a plurality of input data that is or is representative of a plurality of communications;
using a tuner program (600) to tune confidence values associated with each of a plurality of message classification techniques (510), and wherein the tuner program (600) uses a genetic algorithm (650) to tune the confidence values, in particular wherein the genetic algorithm is designed with a fitness function (260) that models the fitness of candidate solutions in the actual problem domain; and wherein the fitness function (260) expresses cost associated with the mistakes that a configuration made in attempting to correctly classify message vectors in the set of pre-classified data;
wherein a communication is received (700) from a messaging entity (50);
wherein the tuned confidence values are used (710) by the plurality of message classification techniques (510) to classify the received communication;
wherein message classification outputs from the plurality of message classification techniques (510) are combined (720) in order to generate (730) a message profile score; wherein the message profile score is used in deciding what action is to be taken (740) with respect to the communication associated with the messaging entity (50).

**3.** The method of claim 2, wherein the fitness function is:

$$Fitness = \frac{\sum |S_{CAT1_{MISTAKES_i}} - T|}{N_{CAT1}} + C \times \frac{\sum |S_{CAT2_MISTAKES_j} - T + 1|}{N_{CAT2}}$$

wherein $N_{CAT1}$ is number of message vectors from the overall data set that belong to a first category;
wherein $N_{CAT2}$ is number of message vectors from the overall data set that belong to a second category;
wherein C is a constant multiplier for misclassified messages from the second category;
wherein $S_{CAT1_MIKSTAKE\ i}$ is a message profiler score of message vector i from the first message category that has been misclassified to belong in the other category; wherein $S_{CAT2_MIKSTAKE\ i}$ is a message profiler score of message vector i from the second message category that has been misclassified to belong in the other category; wherein T is a message profiler numeric threshold above which a message is considered to belong to the first category; or wherein the method is configured to operate with adaptive message blocking and whitelisting.

**4.** The method of claim 2, wherein the communication is a e-mail message or VoIP communication or Instant Messaging communication; or wherein the communication is a legitimate e-mail message or spam or a virus or a communication that violates corporate policy.

**5.** The method of claim 2, wherein the message classification techniques (510) include at least two techniques selected from the group: a Reverse DNS (RDNS) classification technique, Real-time Black-hole Lists (RBLs) classification technique, reputation server classification technique, signature-based classification technique, fingerprinting-based classification technique, message header analysis classification technique, sender authentication set of classification techniques, Bayesian filtering statistical classification technique, clustering classification technique, and content filtering classification technique.

**6.** The method of claim 2, wherein the message profile score is determined by:

$$Score = \sum_{i=1}^{N} SVi \times Ci$$

wherein SV, is a confidence value associated with classification technique *i*, and $C_i$ is a classification technique output produced by classification technique *i*; or
wherein the message profile score is determined by:

$$Score = \sum_{i=1}^{N} (SV1i \times Ci + SV2i \times C_i^2)$$

wherein $SV_{1i}$ and $SV_{2i}$ are confidence values associated with classification technique *i*, and $C_i$ is a classification technique output produced by classification technique *i*.

**7.** The method of claim 2, wherein at least one of the message classification techniques (510) includes a reputation scoring technique; wherein the reputation scoring technique assigns a reputation probability to a messaging entity (50); wherein the reputation indicative probability indicates reputability of a messaging entity based upon extent to which the identified one or more communication's characteristics exhibit or conform to one or more reputation-related criteria.

**8.** A computer readable storage medium storing a program that causes a computer to carry out a method according to any one of the claims 2 to 7.

**Patentansprüche**

**1.** System zum Betrieb auf einem oder mehreren Datenprozessor(en), um Kommunikationen von Mitteilungsübermittlungsentitäten (50) zu klassifizieren, das Folgendes umfasst:

eine Mehrzahl von Mitteilungsklassifizierungstechniken (510);
wobei die Mehrzahl von Mitteilungsklassifizierungstechniken (510) dazu ausgestaltet ist, eine Kommunikation zu klassifizieren, die von einer Mitteilungsübermittlungsentität (50) empfangen wird;
Mitteilungsprofilierungslogik (500), die dazu ausgestaltet ist, die Ausgabe der Mitteilungsklassifizierungen zu kombinieren, um ein Mitteilungsprofilmaß zu erzeugen;
wobei jede Mitteilungsklassifizierungstechnik (510) einem Vertrauenswert zugeordnet ist, der beim Erzeugen einer Ausgabe einer Mitteilungsklassifizierung von der Mitteilungsklassifizierungstechnik (510) verwendet wird; und
wobei ein Filterwert von jeder der Klassifizierungstechniken mit seinem zugeordneten Vertrauenswert multipliziert wird, um die Ausgabe der Mitteilungsklassifizierung zu erzeugen, insbesondere wobei ein Abstimmerprogramm (600) verwendet wird, um die Vertrauenswerte abzustimmen, die den Mitteilungsklassifizierungstechniken (510) zugeordnet sind,
wobei das Abstimmerprogramm (600) einen genetischen Algorithmus (650) verwendet, um die Vertrauenswerte abzustimmen;
wobei der genetische Algorithmus mit einer Eignungsfunktion (260) ausgestaltet ist, welche die Eignung von Kandidatenlösungen in der tatsächlichen Problemdomäne modelliert; und
wobei die Eignungsfunktion (260) die Kosten ausdrückt, welche den Fehlern zugeordnet sind, die eine Konfiguration bei dem Versuch gemacht hat, Mitteilungsvektoren in dem Satz von vorklassifizierten Daten korrekt zu klassifizieren, insbesondere wobei das System dazu ausgestaltet ist, mit adaptiver Mitteilungsblockierung und Positivlisten betrieben zu werden.

**2.** Verfahren für den Betrieb auf einem oder mehreren Datenprozessor(en) zum Klassifizieren von Kommunikationen, das Folgendes umfasst:

Empfangen einer Mehrzahl von Eingangsdaten, die eine Mehrzahl von Kommunikationen sind oder dafür repräsentativ sind;
Verwenden eines Abstimmerprogramms (600), um Vertrauenswerte abzustimmen, die jeder Mitteilungsklassifizierungstechnik aus einer Mehrzahl von Mitteilungsklassifizierungstechniken (510) zugeordnet sind, und wobei das Abstimmerprogramm (600) einen genetischen Algorithmus (650) verwendet, um die Vertrauenswerte abzustimmen, insbesondere wobei der genetische Algorithmus mit einer Eignungsfunktion (260) ausgestaltet ist, welche die Eignung von Kandidatenlösungen in der tatsächlichen Problemdomäne modelliert; und wobei die Eignungsfunktion (260) Kosten ausdrückt, die den Fehlern zugeordnet sind, welche eine Konfiguration bei dem Versuch gemacht hat, Mitteilungsvektoren in dem Satz von vorklassifizierten Daten korrekt zu klassifizieren;
wobei eine Kommunikation von einer Mitteilungsübermittlungsentität (50) empfangen (700) wird;
wobei die abgestimmten Vertrauenswerte durch die Mehrzahl von Mitteilungsklassifizierungstechniken (510) verwendet werden (710), um die empfangene Kommunikation zu klassifizieren;
wobei die Ausgabe der Mitteilungsklassifizierungen von der Mehrzahl von Mitteilungsklassifizierungstechniken (510) kombiniert (720) wird, um ein Mitteilungsprofilmaß zu erzeugen (730); wobei das Mitteilungsprofilmaß bei der Entscheidung verwendet wird, welche Maßnahme mit Bezug auf die Kommunikation vorgenommen (740) werden soll, die der Mitteilungsübermittlungsentität (50) zugeordnet ist.

**3.** Verfahren nach Anspruch 2,
wobei die Eignungsfunktion:

$$\text{Eignung} = \frac{\sum |\, S_{KAT1FEHLERi} - T|}{N_{KAT1}} + C \text{ x } \frac{\sum |S_{KAT2_FEHLERj} - T + 1|}{N_{KAT2}}$$

ist, wobei es sich bei $N_{KAT1}$ um eine Anzahl der Mitteilungsvektoren von dem gesamten Datensatz handelt, welche zu einer ersten Kategorie gehören;
wobei es sich bei $N_{KAT2}$ um eine Anzahl der Mitteilungsvektoren von dem gesamten Datensatz handelt, welche zu einer zweiten Kategorie gehören;
wobei es sich bei C um einen konstanten Multiplikator für fehlklassifizierte Mitteilungen aus der zweiten Kategorie handelt;
wobei es sich bei $S_{KAT1_FEHLERi}$ um ein Mitteilungsprofilermaß eines Mitteilungsvektors i aus der ersten Mitteilungskategorie handelt, die dergestalt fehlklassifiziert wurde, dass sie zu der anderen Kategorie gehört; wobei es sich bei $S_{KAT2_FEHLERi}$ um ein Mitteilungsprofilermaß eines Mitteilungsvektors i aus der zweiten Mitteilungskategorie handelt, die dergestalt fehlklassifiziert wurde, dass sie zu der anderen Kategorie gehört; wobei es sich bei T um einen numerischen Schwellenwert eines Mitteilungsprofilers handelt, über welchem von einer Mitteilung angenommen wird, zu der ersten Kategorie zu gehören; oder
wobei das Verfahren dazu ausgestaltet ist, mit adaptiver Mitteilungsblockierung und Positivliste betrieben zu werden.

**4.** Verfahren nach Anspruch 2, wobei es sich bei der Kommunikation um eine E-Mail-Mitteilung oder VoIP-Kommunikation oder Sofortmitteilungskommunikation handelt; oder wobei es sich bei der Kommunikation um eine legitime E-Mail-Mitteilung oder Spam oder einen Virus oder eine Kommunikation handelt, welche eine Unternehmensrichtlinie verletzt.

**5.** Verfahren nach Anspruch 2, wobei die Mitteilungsklassifizierungstechniken (510) mindestens zwei Techniken aufweisen, die aus der Gruppe: eine Reverse-DNS(RDNS)-Klassifizierungstechnik, Echtzeit-Schwarzlochlisten(Real-time Black-Hole Lists, RBLs) - Klassifizierungstechnik, Reputationsserver-Klassifizierungstechnik, auf Signatur basierte Klassifizierungstechnik, auf Fingerabdruck basierte Klassifizierungstechnik, Mitteilungskopfanalyse-Klassifizierungstechnik, Absenderauthentifizierungssatz von Klassifizierungstechniken, statistische bayessche Filterungs-Klassifizierungstechnik, Cluster-Klassifizierungstechnik und Inhaltsfilterungs-Klassifizierungstechnik ausgewählt werden.

**6.** Verfahren nach Anspruch 2, wobei das Mitteilungsprofilmaß durch:

$$\text{Maß} = \sum_{i=1}^{N} \text{SVi x Ci}$$

bestimmt wird, wobei es sich bei $SV_i$ um einen Vertrauenswert handelt, welcher der Klassifizierungstechnik *i* zugeordnet ist, und es sich bei $C_i$ um eine Ausgabe einer Klassifizierungstechnik handelt, die durch die Klassifizierungstechnik *i* hergestellt wird; oder
wobei das Mitteilungsprofilmaß bestimmt wird durch:

$$\text{Maß} = \sum_{i=1}^{N} (SV1i \times Ci + SV2i \times C_i^2)$$

wobei es sich bei $SV_{1i}$ und $SV_{2i}$ um Vertrauenswerte handelt, die der Klassifizierungstechnik *i* zugeordnet sind, und es sich bei $C_i$ um eine Ausgabe einer Klassifizierungstechnik handelt, die durch die Klassifizierungstechnik *i* hergestellt wird.

**7.** Verfahren nach Anspruch 2, wobei mindestens eine der Mitteilungsklassifizierungstechniken (510) eine Reputationsmaßtechnik enthält; wobei die Reputationsmaßtechnik einer Mitteilungsübermittlungsentität (50) eine Reputationswahrscheinlichkeit zuweist; wobei die eine Reputation angebende Wahrscheinlichkeit die Reputationsfähigkeit einer Mitteilungsübermittlungsentität auf der Grundlage des Umfangs angibt, in welchem die identifizierte oder die identifizierten Kommunikationseigenschaften ein oder mehrere mit Reputation zusammenhängende Kriterien aufweisen oder damit übereinstimmen.

**8.** Computerlesbarer Speicherungsdatenträger, in welchem ein Programm gespeichert ist, das einen Computer veranlasst, ein Verfahren nach einem der Ansprüche 2 bis 7 auszuführen.

**Revendications**

**1.** Système pour une opération sur un ou plusieurs processeurs de données pour classer des communications entre des entités de messagerie (50), comprenant :

une pluralité de techniques de classification de message (510) ;
dans lequel la pluralité de techniques de classification de message (510) sont configurées pour classer une communication reçue d'une entité de messagerie (50) ;
une logique de profilage de message (500) configurée pour combiner les sorties de classification de message afin de générer un score de profil de message ;
dans lequel chaque technique de classification de message (510) est associée à une valeur de confiance qui est utilisée lors de la génération d'une sortie de classification de message de la technique de classification de message (510) ; et
dans lequel une valeur de filtre provenant de chacune des techniques de classification est multipliée par sa valeur de confiance associée afin de générer la sortie de classification de message, en particulier dans lequel un programme de dispositif de réglage (600) est utilisé pour régler les valeurs de confiance associées aux techniques de classification de message (510),
dans lequel le programme de dispositif de réglage (600) utilise un algorithme génétique (650) pour régler la valeur de confiance ;
dans lequel l'algorithme génétique est conçu avec une fonction d'adaptation (260) qui modélise l'adaptation de solutions potentielles dans le domaine problématique actuel ; et
dans lequel la fonction d'adaptation (260) exprime le coût associé aux erreurs qu'une configuration a faites lors d'une tentative de classer correctement des vecteurs de message dans l'ensemble de données préclassées, en particulier dans lequel le système est configuré pour fonctionner avec un blocage et une mise en liste blanche de message adaptatifs.

**2.** Procédé pour une opération sur un ou plusieurs processeurs de données pour classer des communications consistant :

à recevoir une pluralité de données d'entrée qui sont, ou représentent, une pluralité de communications ;
à utiliser un programme de dispositif de réglage (600) pour régler des valeurs de confiance associées à chaque technique de classification de message d'une pluralité de techniques de classification de message (510),
et dans lequel le programme de dispositif de réglage (600) utilisé un algorithme génétique (650) pour régler les valeurs de confiance, en particulier dans lequel l'algorithme génétique est conçu avec une fonction d'adaptation (260) qui modélise l'adaptation de solutions potentielles dans le domaine problématique actuel ; et dans lequel la fonction d'adaptation (260) exprime un coût associé aux erreurs qu'une configuration a faites lors d'une tentative de classer correctement des vecteurs de message dans l'ensemble de données préclassées ;
dans lequel une communication est reçue (700) d'une entité de messagerie (50) ;
dans lequel les valeurs de confiance réglées sont utilisées (710) par la pluralité de techniques de classification de message (510) pour classer la communication reçue ;
dans lequel des sorties de classification de message depuis la pluralité de techniques de classification de message (510) sont combinées (720) afin de générer (730) un score de profil de message ; dans lequel le score de profil de message est utilisé lorsqu'il convient de décider quelle action doit être prise (740) par rapport à la communication associée à l'entité de messagerie (50).

**3.** Procédé selon la revendication 2, dans lequel la fonction d'adaptation est :

$$\text{Adaptation}=\frac{\sum|S_{CAT1_{ERREURS}}\text{i} - T|}{N_{CAT1}} + C \text{ x } \frac{\sum|S_{CAT2_ERREURS}\text{j} - T+1|}{N_{CAT2}}$$

dans laquelle $N_{CAT1}$ est le nombre de vecteurs de message de tout l'ensemble de données qui appartient à une première catégorie ;
dans laquelle $N_{CAT2}$ est le nombre de vecteurs de message de tout l'ensemble de données qui appartient à une seconde catégorie ;
dans laquelle C est un multiplicateur constant pour des messages mal classés de la seconde catégorie ; dans laquelle $S_{CAT1_ERREUR\ i}$ est un score de profileur de message du vecteur de message i de la première catégorie de message qui a été mal classé de sorte à faire partie de l'autre catégorie ; dans laquelle $S_{CAT2_ERREUR\ i}$ est un score de profileur de message du vecteur de message i de la seconde catégorie de message qui a été mal classé de sorte à faire partie de l'autre catégorie ; dans laquelle T est un seuil numérique de profileur de message au-dessus duquel un message est considéré appartenir à la première catégorie ; ou
dans lequel le procédé est configuré pour fonctionner avec un blocage et une mise en liste blanche de message adaptatifs.

**4.** Procédé selon la revendication 2, dans lequel la communication est un message de courrier électronique ou une communication VoIP ou une communication de messagerie instantanée ; ou dans lequel la communication est un message de courrier électronique légitime ou un pourriel ou un virus ou une communication qui viole une politique institutionnelle.

**5.** Procédé selon la revendication 2, dans lequel les techniques de classification de message (510) comprennent au moins deux techniques sélectionnées dans le groupe : une technique de classification DNS inverse (RDNS), une technique de classification de liste de trous noirs en temps réel (RBL), une technique de classification de serveur de réputation, une technique de classification basée sur une signature, une technique de classification basée sur les empreintes digitales, une technique de classification par analyse d'en-tête de message, un ensemble de techniques de classification par authentification de l'expéditeur, une technique de classification statistique par filtrage bayésien, une technique de classification par clustérisation et une technique de classification par filtrage de contenu.

**6.** Procédé selon la revendication 2, dans lequel le score de profil de message est déterminé par :

$$Score = \sum_{i=1}^{N} SVi \times Ci$$

dans lequel $SV_i$ est une valeur de confiance associée à une technique de classification *i* et $C_i$ est une sortie de technique de classification produite par la technique de classification *i* ; ou
dans lequel le score de profil de message est déterminé par :

$$Score = \sum_{i=1}^{N}(SV1i \times Ci + SV2i \times C_i^2)$$

dans lequel $SV_{1i}$ et $SV_{2i}$ sont des valeurs de confiance associées à une technique de classification *i* et $C_i$ est une sortie de technique de classification produite par la technique de classification *i.*

**7.** Procédé selon la revendication 2, dans lequel au moins l'une des techniques de classification de message (510) comprend une technique de notation de réputation ; dans lequel la technique de notation de réputation attribue une probabilité de réputation à une entité de messagerie (50) ; dans lequel la probabilité indicatrice de réputation indique la réputation d'une entité de messagerie basée sur l'importance qu'une ou plusieurs caractéristiques identifiées d'une communication montrent ou se conforment à un ou plusieurs critères liés à la réputation.

**8.** Support de stockage lisible par ordinateur stockant un programme qui contraint un ordinateur à réaliser un procédé selon l'une quelconque des revendications 2 à 7.

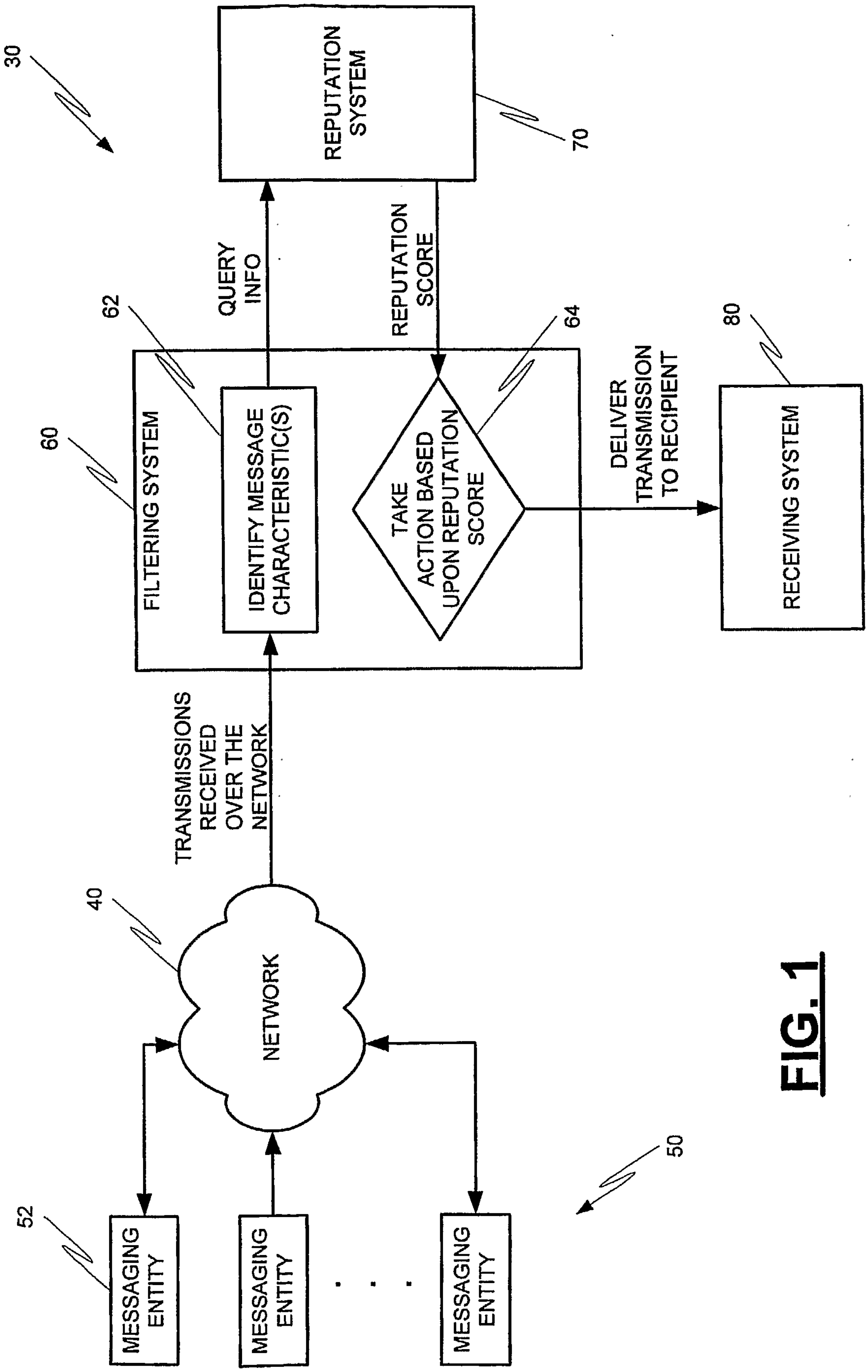
30
REPUTATION SYSTEM
70
QUERY INFO
REPUTATION SCORE
62
64
60
FILTERING SYSTEM
IDENTIFY MESSAGE CHARACTERISTIC(S)
TAKE ACTION BASED UPON REPUTATION SCORE
DELIVER TRANSMISSION TO RECIPIENT
80
RECEIVING SYSTEM
TRANSMISSIONS RECEIVED OVER THE NETWORK
40
NETWORK
52
MESSAGING ENTITY
MESSAGING ENTITY
MESSAGING ENTITY
50

FIG. 1

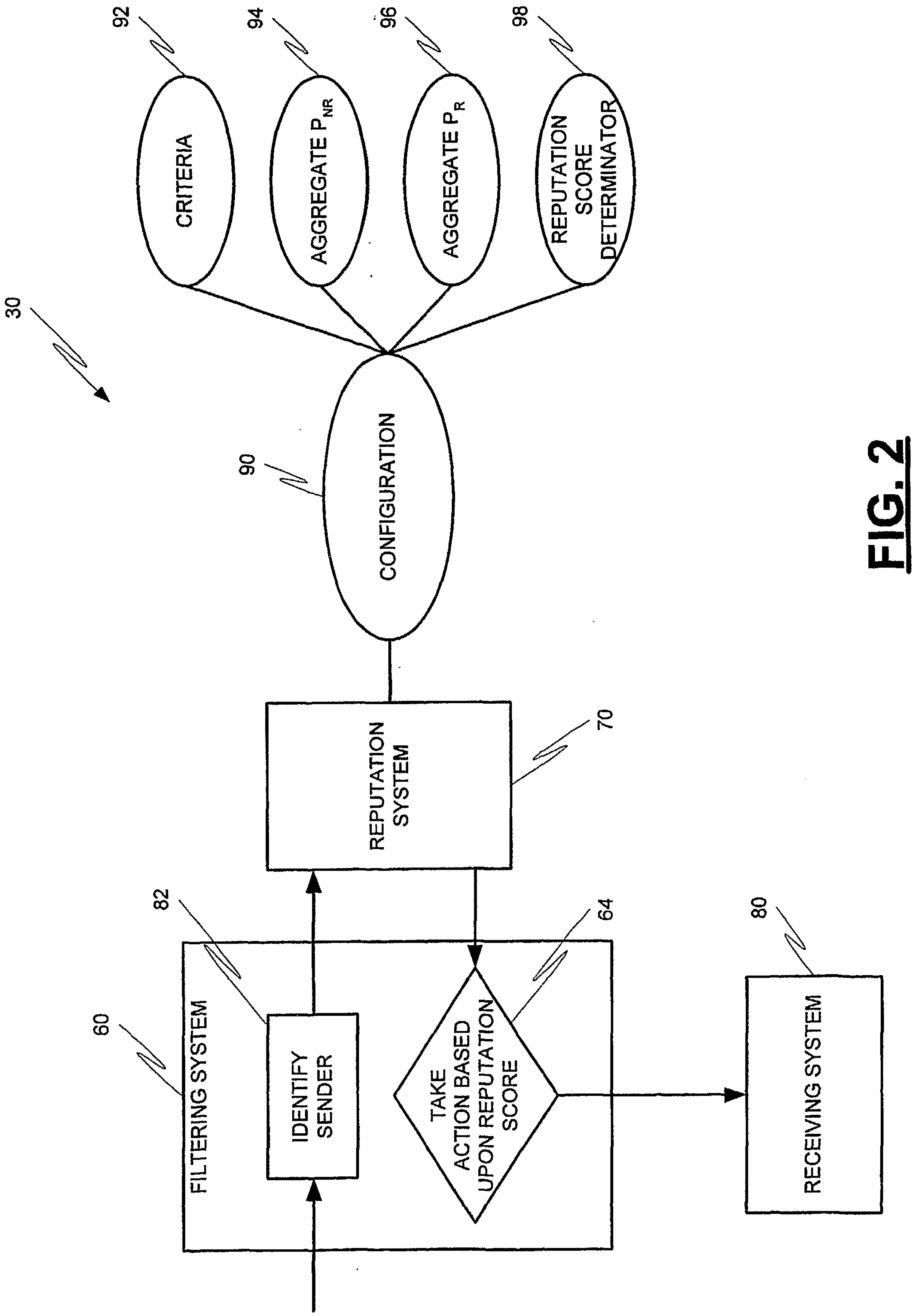
30
92
CRITERIA
94
AGGREGATE $P_{NR}$
96
AGGREGATE $P_R$
98
REPUTATION SCORE DETERMINATOR
90
CONFIGURATION
REPUTATION SYSTEM
70
60
FILTERING SYSTEM
82
IDENTIFY SENDER
64
TAKE ACTION BASED UPON REPUTATION SCORE
80
RECEIVING SYSTEM

FIG. 2

100

| | | $P_{NR}$ (Probability of Non-Reputable Sender) | | | | | | | | | | |
|---|---|---|---|---|---|---|---|---|---|---|---|---|
| | | 0.0 | 0.1 | 0.2 | 0.3 | 0.4 | 0.5 | 0.6 | 0.7 | 0.8 | 0.9 | 1.0 |
| $P_R$ (Probability of Reputable Sender) | 0.0 | 0 | 3 | 5 | 6 | 5 | 4 | 4 | 10 | 27 | 65 | 140 |
| | 0.1 | -3 | 0 | 2 | 3 | 3 | 3 | 5 | 12 | 28 | 62 | 126 |
| | 0.2 | -5 | -2 | 0 | 1 | 2 | 3 | 5 | 11 | 24 | 53 | 106 |
| | 0.3 | -6 | -3 | -1 | 0 | 1 | 2 | 4 | 9 | 20 | 43 | 85 |
| | 0.4 | -5 | -3 | -2 | -1 | 0 | 1 | 3 | 7 | 16 | 33 | 66 |
| | 0.5 | -4 | -3 | -3 | -2 | -1 | 0 | 2 | 5 | 12 | 25 | 50 |
| | 0.6 | -4 | -5 | -5 | -4 | -3 | -2 | 0 | 3 | 8 | 18 | 37 |
| | 0.7 | -10 | -12 | -11 | -9 | -7 | -5 | -3 | 0 | 5 | 13 | 27 |
| | 0.8 | -27 | -28 | -24 | -20 | -16 | -12 | -8 | -5 | 0 | 7 | 18 |
| | 0.9 | -65 | -62 | -53 | -43 | -33 | -25 | -18 | -13 | -7 | 0 | 10 |
| | 1.0 | -140 | -126 | -106 | -85 | -66 | -50 | -37 | -27 | -18 | -10 | 0 |

110

120

130

**FIG. 3**

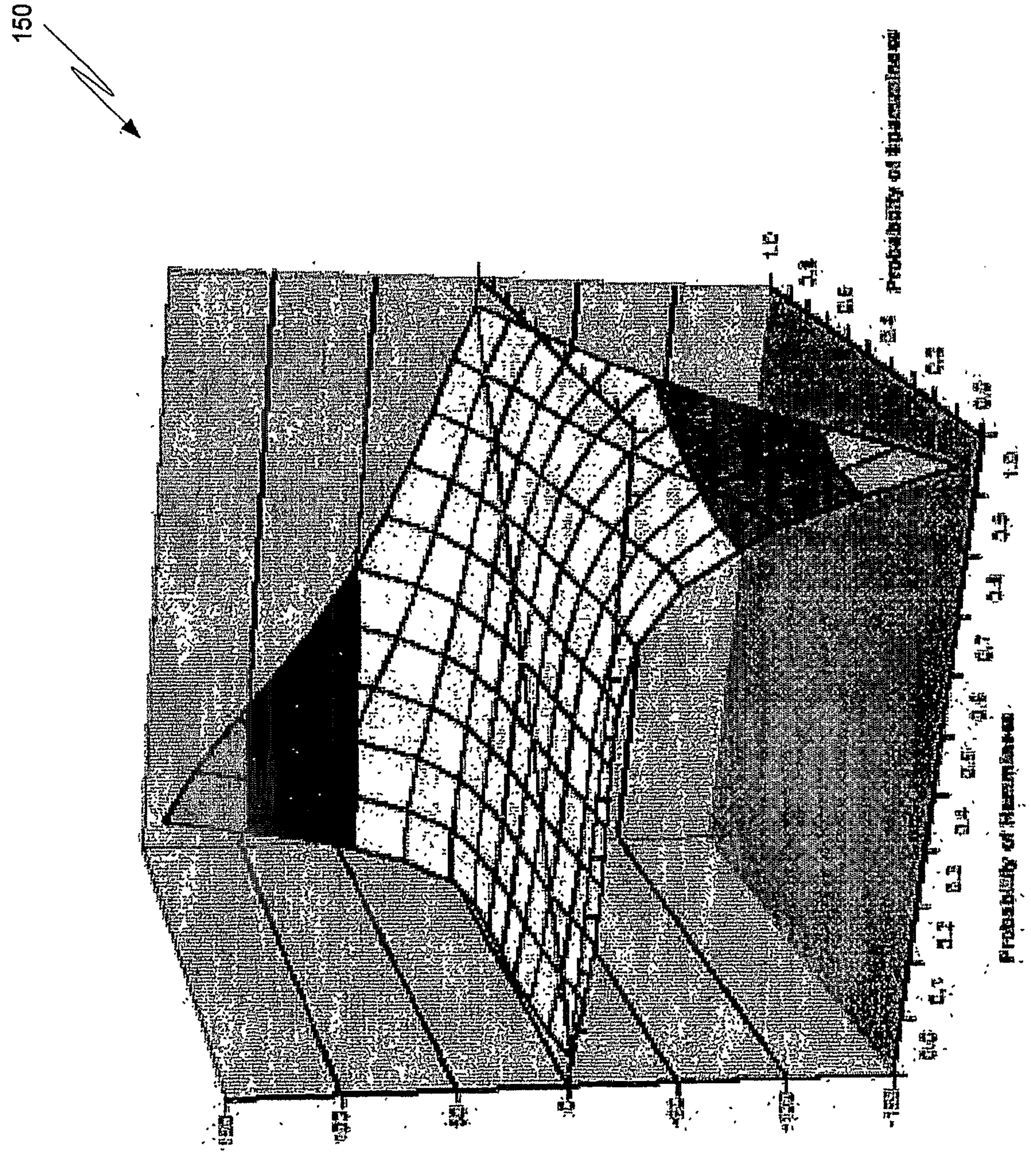


FIG. 4

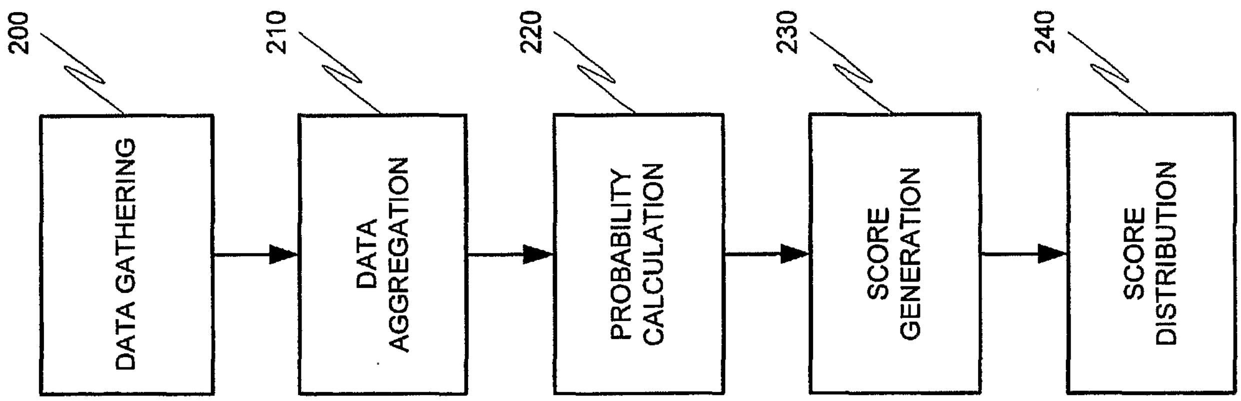
200
210
220
230
240
DATA GATHERING
DATA AGGREGATION
PROBABILITY CALCULATION
SCORE GENERATION
SCORE DISTRIBUTION

FIG. 5

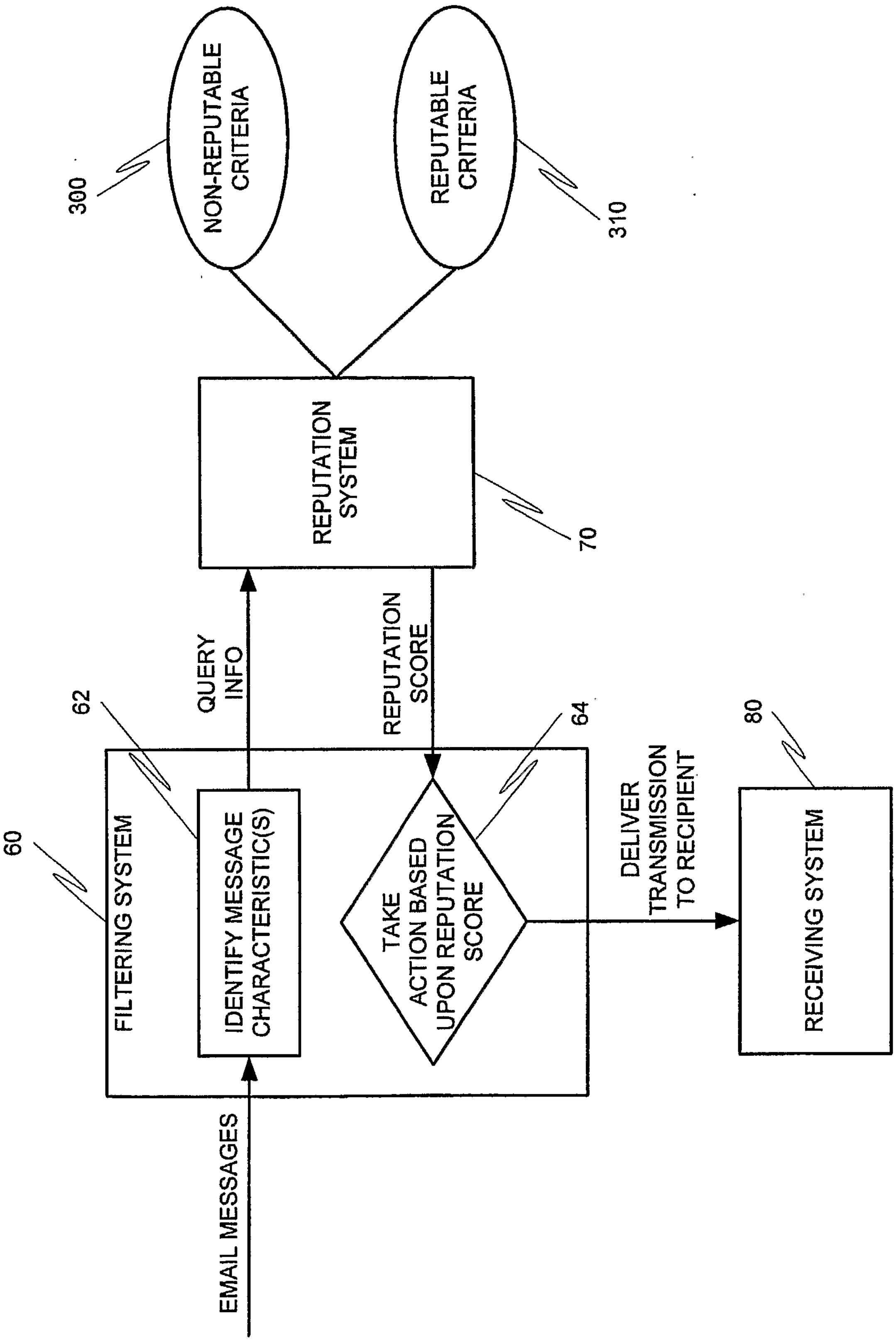
NON-REPUTABLE CRITERIA
300
REPUTABLE CRITERIA
310
REPUTATION SYSTEM
70
QUERY INFO
REPUTATION SCORE
FILTERING SYSTEM
60
IDENTIFY MESSAGE CHARACTERISTIC(S)
62
TAKE ACTION BASED UPON REPUTATION SCORE
64
EMAIL MESSAGES
DELIVER TRANSMISSION TO RECIPIENT
RECEIVING SYSTEM
80

FIG. 6

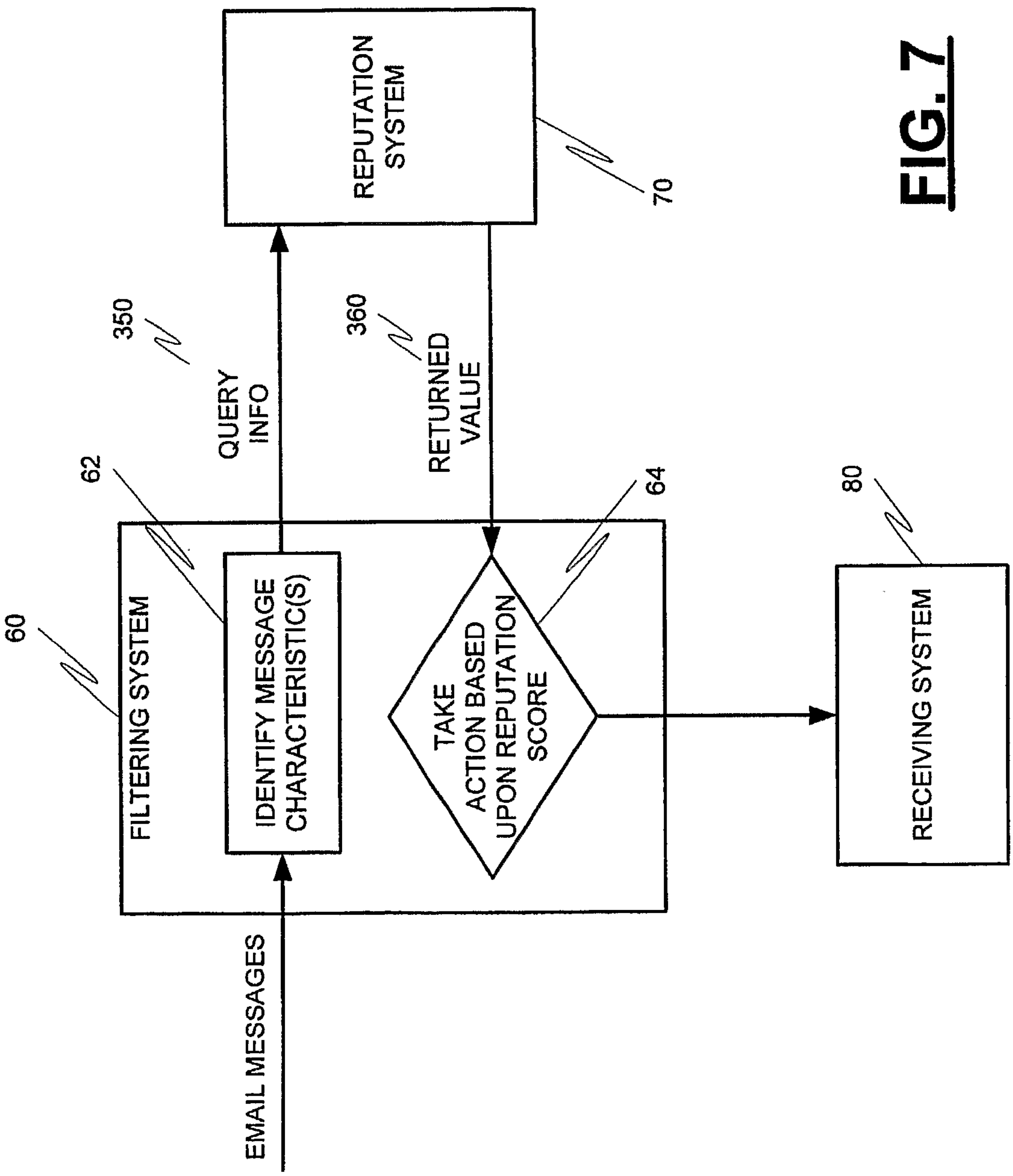
REPUTATION SYSTEM
70
350
QUERY INFO
360
RETURNED VALUE
62
64
60
FILTERING SYSTEM
IDENTIFY MESSAGE CHARACTERISTIC(S)
TAKE ACTION BASED UPON REPUTATION SCORE
80
RECEIVING SYSTEM
EMAIL MESSAGES

FIG. 7

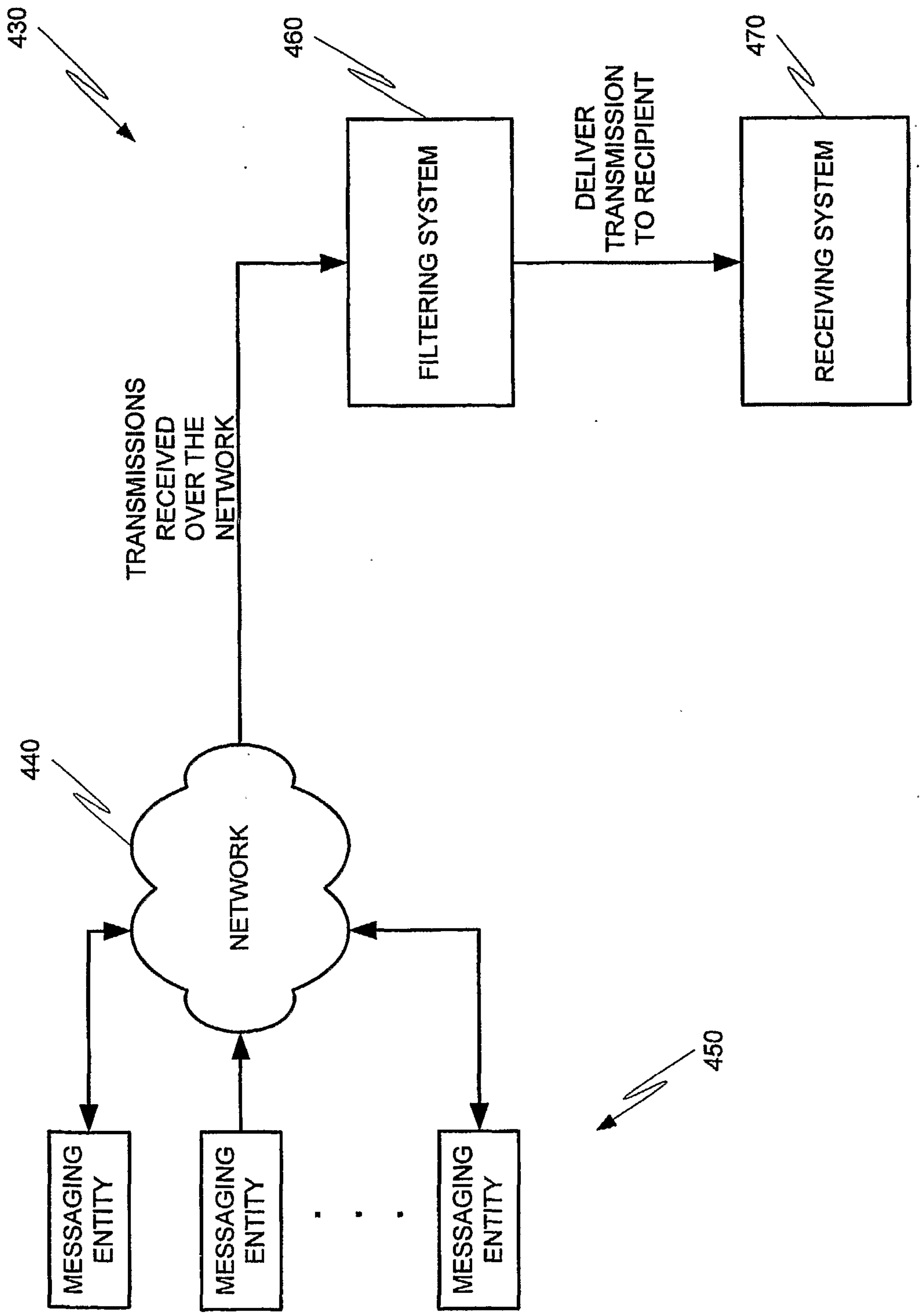
430
460
470
DELIVER TRANSMISSION TO RECIPIENT
FILTERING SYSTEM
RECEIVING SYSTEM
TRANSMISSIONS RECEIVED OVER THE NETWORK
440
NETWORK
450
MESSAGING ENTITY
MESSAGING ENTITY
MESSAGING ENTITY

FIG. 8

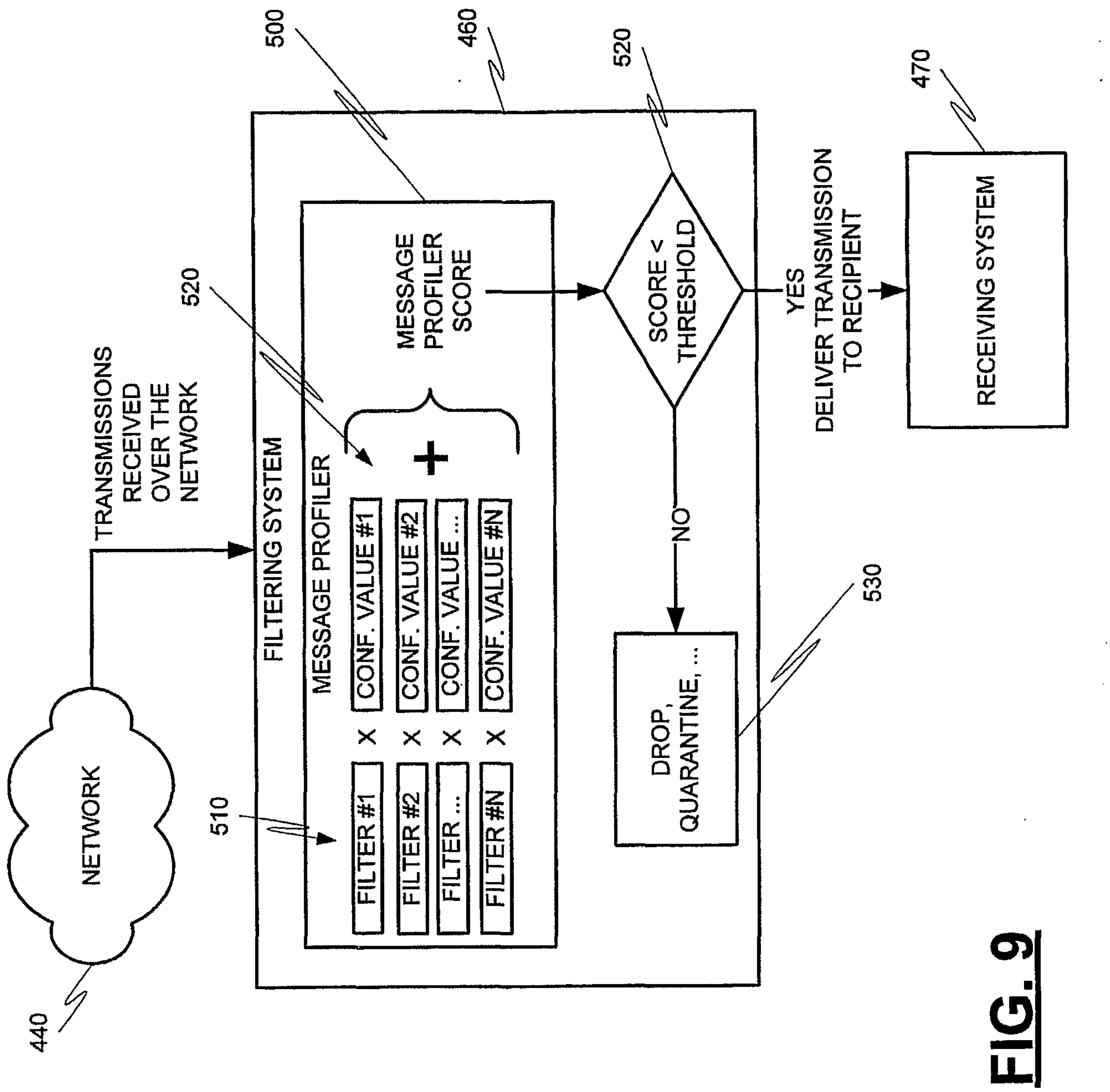
NETWORK
440
TRANSMISSIONS RECEIVED OVER THE NETWORK
FILTERING SYSTEM
460
MESSAGE PROFILER
500
510
520
FILTER #1
FILTER #2
FILTER ...
FILTER #N
X
CONF. VALUE #1
CONF. VALUE #2
CONF. VALUE ...
CONF. VALUE #N
+
MESSAGE PROFILER SCORE
SCORE < THRESHOLD
520
YES
DELIVER TRANSMISSION TO RECIPIENT
NO
DROP, QUARANTINE, ...
530
RECEIVING SYSTEM
470

FIG. 9

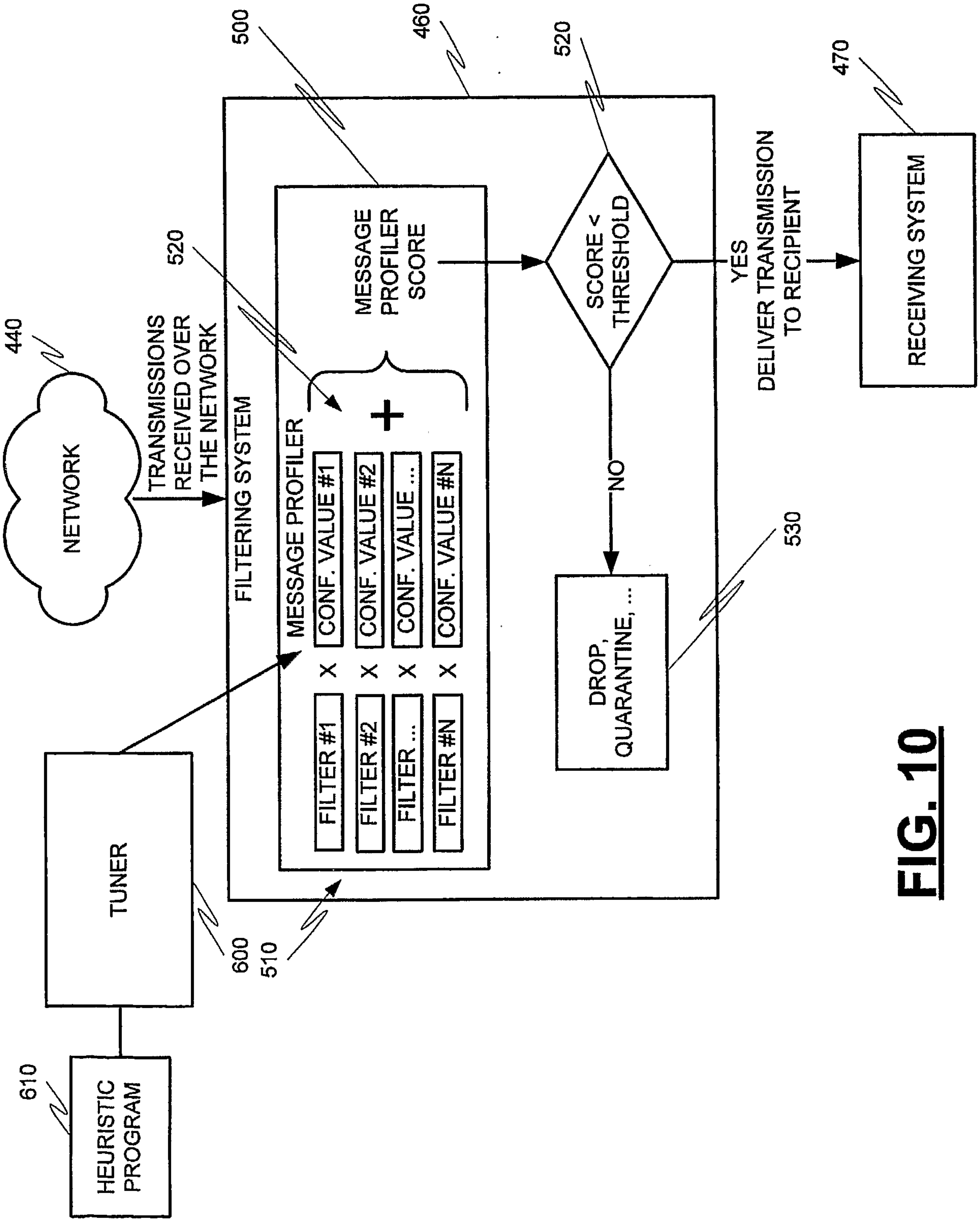
NETWORK
440
TRANSMISSIONS RECEIVED OVER THE NETWORK
FILTERING SYSTEM
460
MESSAGE PROFILER
500
510
520
FILTER #1
FILTER #2
FILTER ...
FILTER #N
CONF. VALUE #1
CONF. VALUE #2
CONF. VALUE ...
CONF. VALUE #N
MESSAGE PROFILER SCORE
SCORE < THRESHOLD
520
YES
DELIVER TRANSMISSION TO RECIPIENT
NO
DROP, QUARANTINE, ...
530
RECEIVING SYSTEM
470
TUNER
600
HEURISTIC PROGRAM
610

FIG. 10

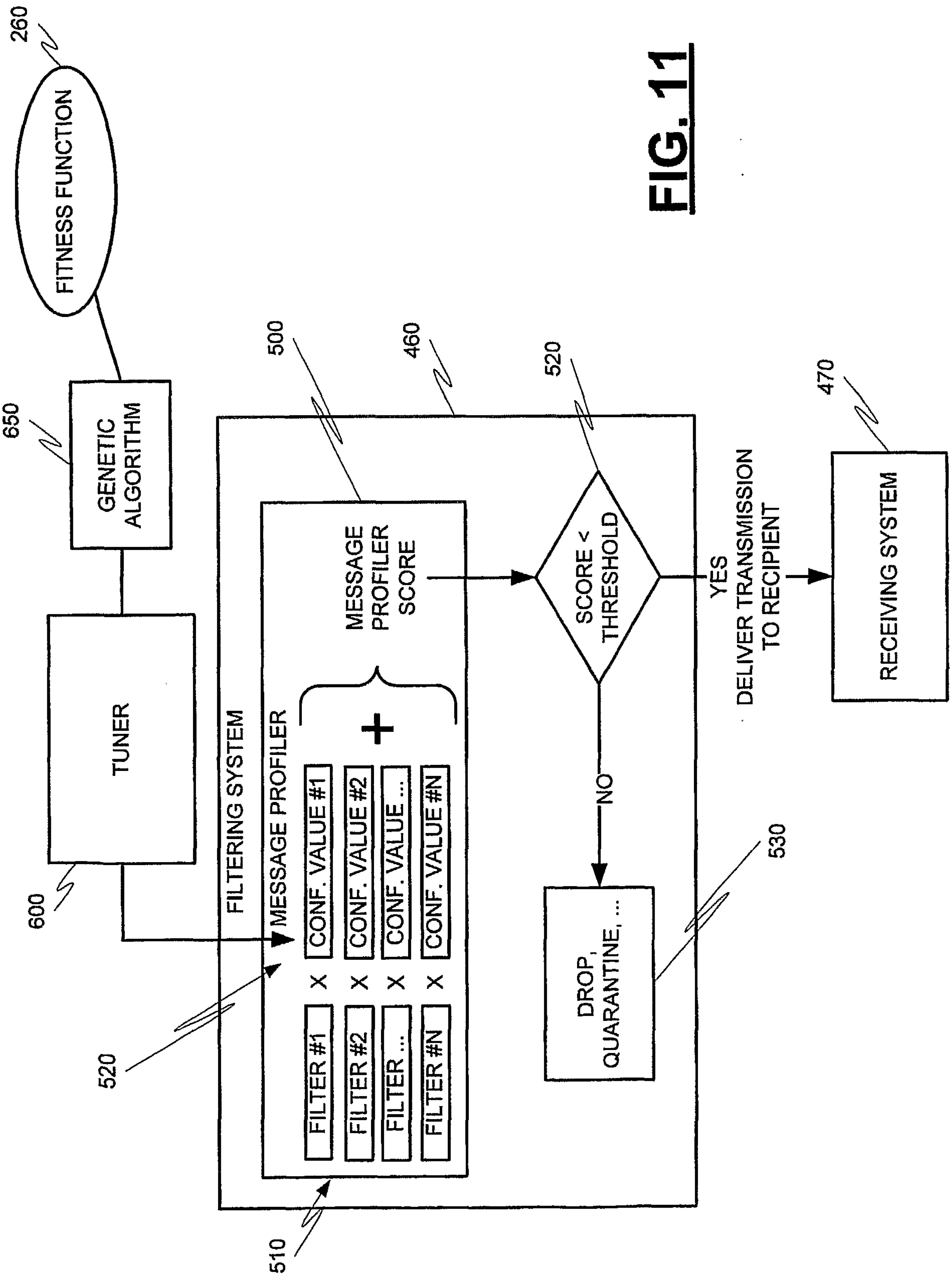
FITNESS FUNCTION
260
GENETIC ALGORITHM
650
TUNER
600
FILTERING SYSTEM
460
MESSAGE PROFILER
500
FILTER #1
FILTER #2
FILTER ...
FILTER #N
X
CONF. VALUE #1
CONF. VALUE #2
CONF. VALUE ...
CONF. VALUE #N
+
MESSAGE PROFILER SCORE
520
510
SCORE < THRESHOLD
520
YES
DELIVER TRANSMISSION TO RECIPIENT
NO
DROP, QUARANTINE, ...
530
RECEIVING SYSTEM
470

FIG. 11

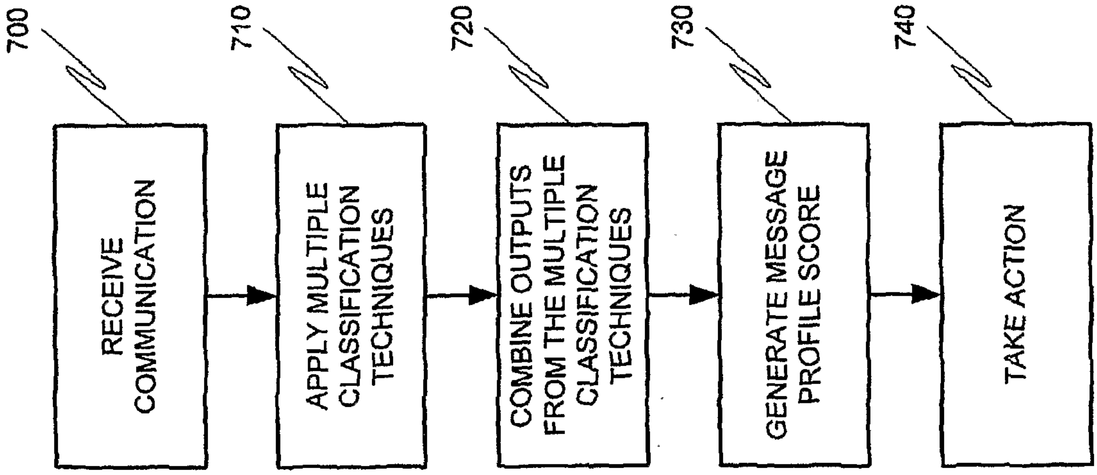
700
RECEIVE COMMUNICATION
710
APPLY MULTIPLE CLASSIFICATION TECHNIQUES
720
COMBINE OUTPUTS FROM THE MULTIPLE CLASSIFICATION TECHNIQUES
730
GENERATE MESSAGE PROFILE SCORE
740
TAKE ACTION

FIG. 12

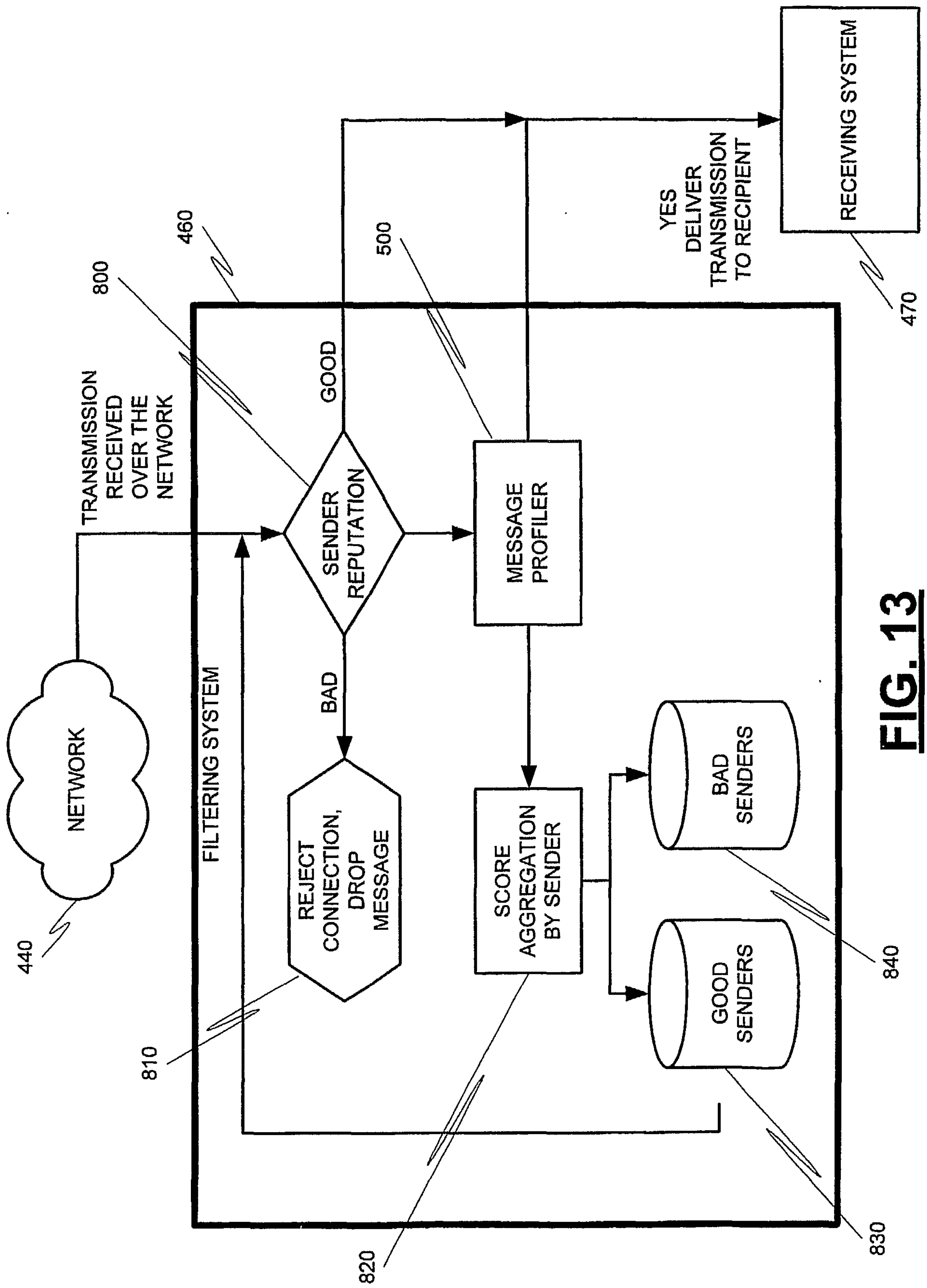
TRANSMISSION RECEIVED OVER THE NETWORK
NETWORK
440
FILTERING SYSTEM
460
800
SENDER REPUTATION
GOOD
BAD
REJECT CONNECTION, DROP MESSAGE
810
MESSAGE PROFILER
500
SCORE AGGREGATION BY SENDER
820
GOOD SENDERS
830
BAD SENDERS
840
YES DELIVER TRANSMISSION TO RECIPIENT
RECEIVING SYSTEM
470

FIG. 13

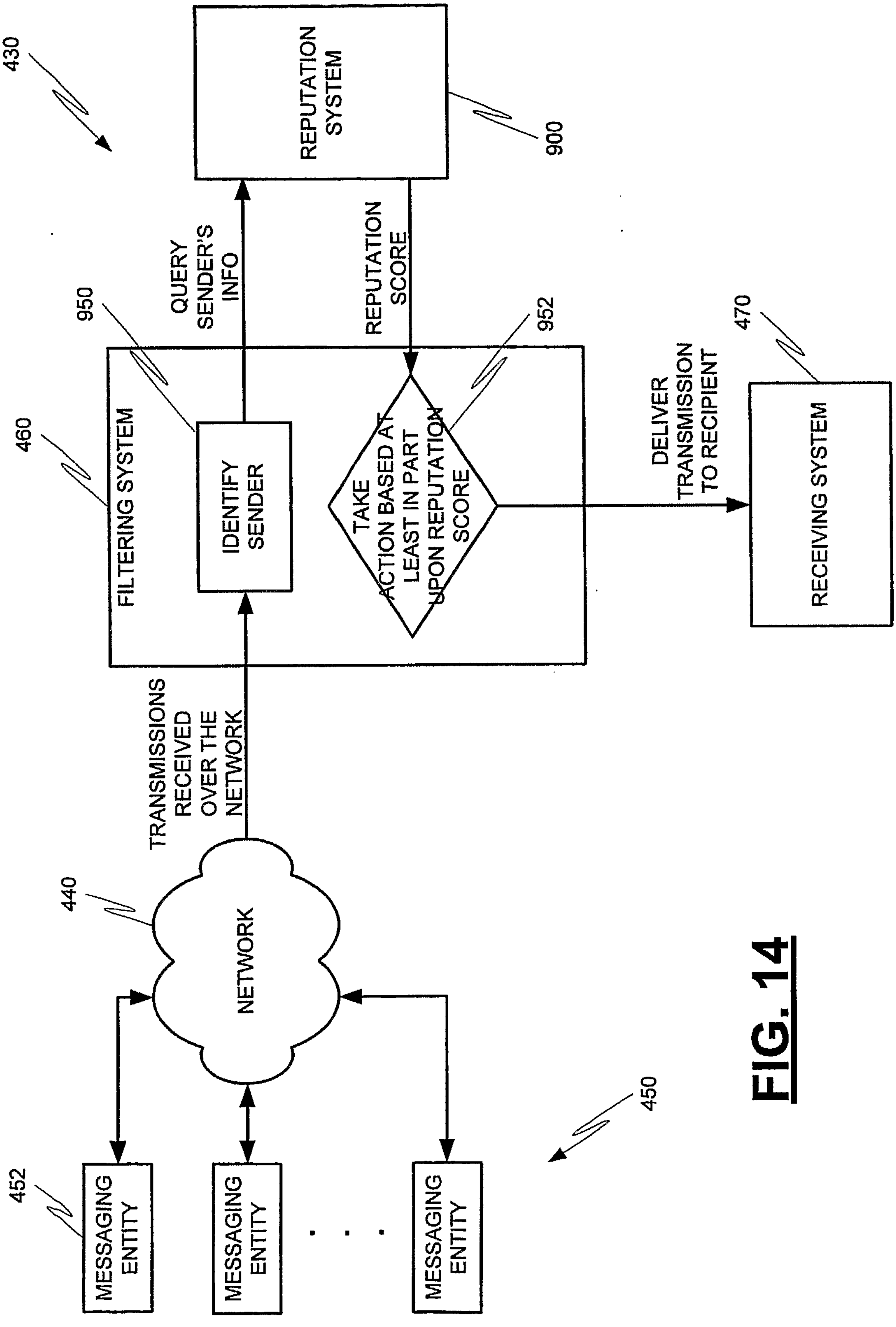
430
REPUTATION SYSTEM
900
QUERY SENDER'S INFO
REPUTATION SCORE
950
952
460
FILTERING SYSTEM
IDENTIFY SENDER
TAKE ACTION BASED AT LEAST IN PART UPON REPUTATION SCORE
DELIVER TRANSMISSION TO RECIPIENT
470
RECEIVING SYSTEM
TRANSMISSIONS RECEIVED OVER THE NETWORK
440
NETWORK
450
452
MESSAGING ENTITY
MESSAGING ENTITY
MESSAGING ENTITY

FIG. 14

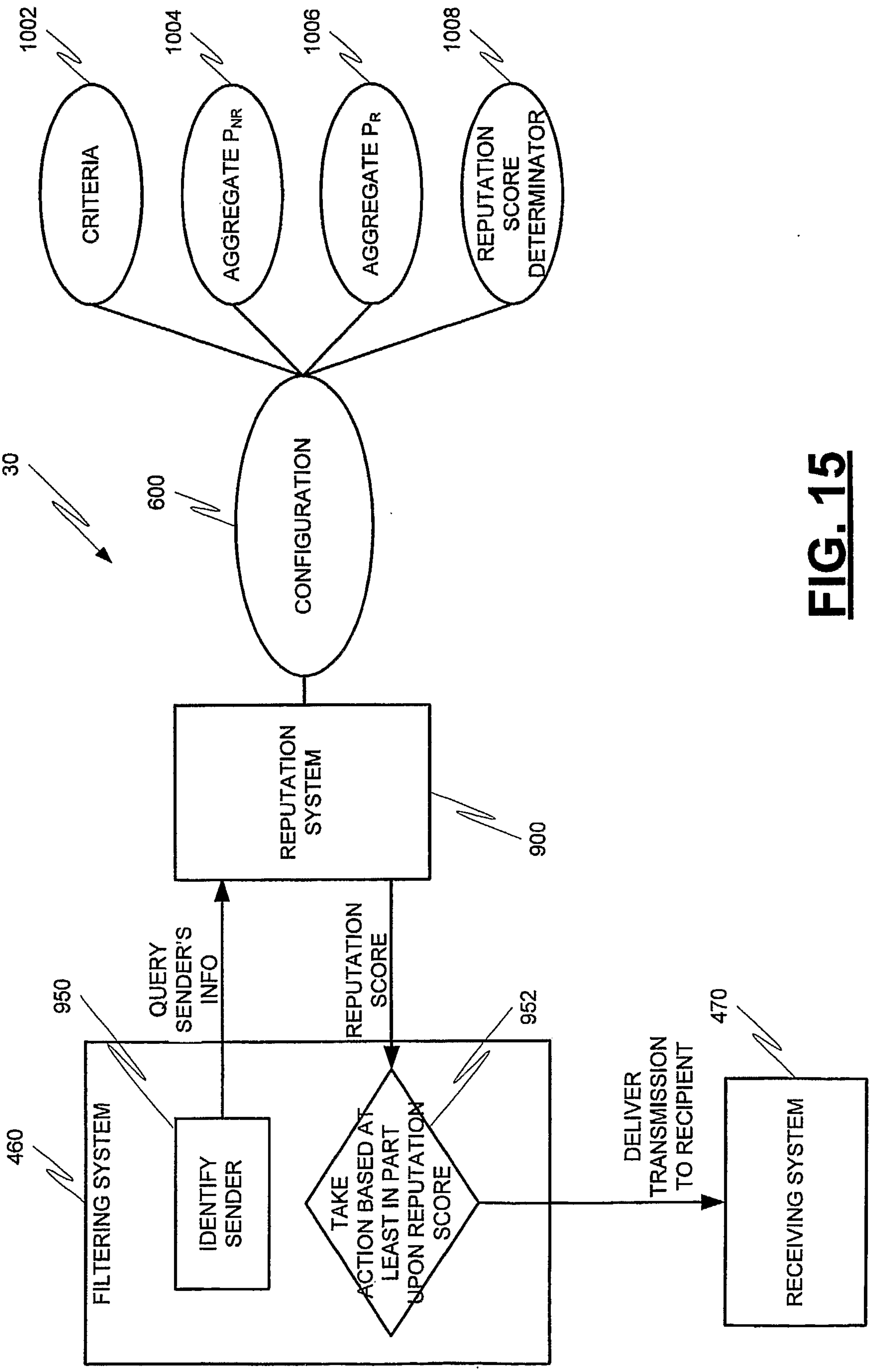
30
1002
CRITERIA
1004
AGGREGATE $P_{NR}$
1006
AGGREGATE $P_R$
1008
REPUTATION SCORE DETERMINATOR
600
CONFIGURATION
REPUTATION SYSTEM
900
QUERY SENDER'S INFO
REPUTATION SCORE
460
FILTERING SYSTEM
950
IDENTIFY SENDER
952
TAKE ACTION BASED AT LEAST IN PART UPON REPUTATION SCORE
DELIVER TRANSMISSION TO RECIPIENT
470
RECEIVING SYSTEM

FIG. 15

1100

| | $P_{NR}$ (Probability of Non-Reputable Sender) | | | | | | | | | | |
|---|---|---|---|---|---|---|---|---|---|---|---|
| $P_R$ (Probability of Reputable Sender) | 0.0 | 0.1 | 0.2 | 0.3 | 0.4 | 0.5 | 0.6 | 0.7 | 0.8 | 0.9 | 1.0 |
| 0.0 | 0 | 3 | 5 | 6 | 5 | 4 | 4 | 10 | 27 | 65 | 140 |
| 0.1 | -3 | 0 | 2 | 3 | 3 | 3 | 5 | 12 | 28 | 62 | 126 |
| 0.2 | -5 | -2 | 0 | 1 | 2 | 3 | 5 | 11 | 24 | 53 | 106 |
| 0.3 | -6 | -3 | -1 | 0 | 1 | 2 | 4 | 9 | 20 | 43 | 85 |
| 0.4 | -5 | -3 | -2 | -1 | 0 | 1 | 3 | 7 | 16 | 33 | 66 |
| 0.5 | -4 | -3 | -3 | -2 | -1 | 0 | 2 | 5 | 12 | 25 | 50 |
| 0.6 | -4 | -5 | -5 | -4 | -3 | -2 | 0 | 3 | 8 | 18 | 37 |
| 0.7 | -10 | -12 | -11 | -9 | -7 | -5 | -3 | 0 | 5 | 13 | 27 |
| 0.8 | -27 | -28 | -24 | -20 | -16 | -12 | -8 | -5 | 0 | 7 | 18 |
| 0.9 | -65 | -62 | -53 | -43 | -33 | -25 | -18 | -13 | -7 | 0 | 10 |
| 1.0 | -140 | -126 | -106 | -85 | -66 | -50 | -37 | -27 | -18 | -10 | 0 |

1110

1120

1130

**FIG. 16**

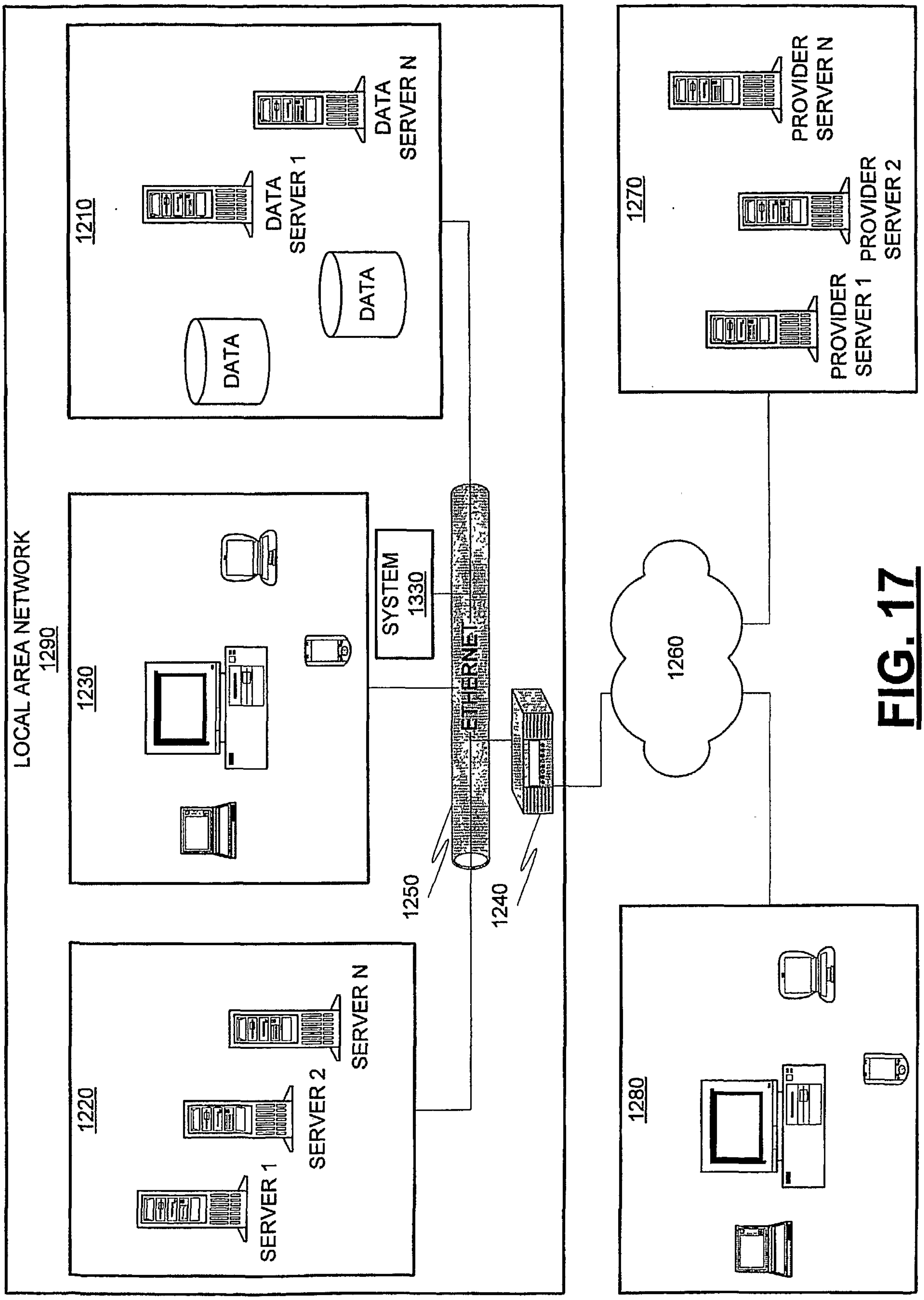

LOCAL AREA NETWORK
1290
1210
DATA
DATA
DATA SERVER 1
DATA SERVER N
1230
SYSTEM
1330
ETHERNET
1250
1240
1220
SERVER 1
SERVER 2
SERVER N
1260
1270
PROVIDER SERVER 1
PROVIDER SERVER 2
PROVIDER SERVER N
1280


FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6161130 A
- US 2004215977 A1
- US 62550704 P